# EUROPEAN PATENT APPLICATION

(11) **EP 4 848 649 A2**
(43) Date of publication of application: **02.12.2026**
(21) Application number: 26212283.1
(22) Date of filing: 30.11.2021
(51) Int. Cl.: H04L 5/00

(54) **RADIO RESOURCE CONTROL CONFIGURATION FOR FORMING A SYNTHETIC POSITIONING RESOURCE**

(30) Priority: 08.02.2021 GR 20210100085
(62) Document number(s) of the earlier application(s) in accordance with Art. 76 EPC: 21835040.3 / 4 289 096
(71) Applicant: QUALCOMM Incorporated, San Diego, CA 92121-1714 (US)
(72) Inventor: BAO, Jingchao, San Diego, 92121-1714 (US); AKKARAKARAN, Sony, San Diego, 92121-1714 (US); LUO, Tao, San Diego, 92121-1714 (US); MONTOJO, Juan, San Diego, 92121-1714 (US); MANOLAKOS, Alexandros, San Diego, 92121-1714 (US)
(74) Representative: Reddie & Grose LLP

(57) **Abstract**

Disclosed are techniques for wireless communication. In an aspect, a user equipment (UE) receives a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof. The UE performs a positioning measurement using the synthetic positioning resource, e.g., the UE receives one or more reference signals within the synthetic positioning resource according to the RRC configuration and performs a measurement of the one or more reference signals. In some aspects, the UE may report a result of the positioning measurement, which may comprise a measured value, a position estimate based on a measured value, or combinations thereof.

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G standard. Furthermore, signaling efficiencies should be enhanced and latency should be substantially reduced compared to current standards.

### SUMMARY

The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

In an aspect, a method of wireless communication performed by a user equipment (UE) includes receiving a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and performing a positioning measurement using the synthetic positioning resource.

In an aspect, a method of wireless communication performed by a UE includes receiving a positioning resource configuration that defines an aggregate positioning resource comprising a plurality of positioning resource blocks that differ from each other in a time domain, in a frequency domain, or both; and performing a positioning measurement using the aggregate positioning resource.

In an aspect, a method of wireless communication performed by a base station includes receiving, from a location server, a RRC configuration that defines a synthetic positioning resource comprising a plurality of positioning resources, the plurality of positioning resources comprising at least one positioning resource from each of a plurality of FLs or BWPs, from each of a plurality of positioning resource sets, or combinations thereof; and sending the RRC configuration to a UE.

In an aspect, a method of wireless communication performed by a base station includes receiving, from a location server, a positioning resource configuration that defines an aggregate positioning resource comprising a plurality of positioning resource blocks that differ from each other in a time domain, in a frequency domain, or both; and sending the positioning resource configuration to a UE.

In an aspect, a method of wireless communication performed by a location server includes determining a RRC configuration that defines a synthetic positioning resource comprising a plurality of positioning resources, the plurality of positioning resources comprising at least one positioning resource from each of a plurality of FLs or BWPs, from each of a plurality of positioning resource sets, or combinations thereof; and sending the RRC configuration to a base station.

In an aspect, a method of wireless communication performed by a location server includes determining a positioning resource configuration that defines an aggregate positioning resource comprising a plurality of positioning resource blocks that differ from each other in a time domain, in a frequency domain, or both; and sending the positioning resource configuration to a base station.

In an aspect, a UE includes a memory; at least one transceiver; and at least one processor communicatively coupled to the memory and the at least one transceiver, the at least one processor configured to: receive a RRC configuration that defines a synthetic positioning resource comprising a plurality of positioning resources, the plurality of positioning resources comprising at least one positioning resource from each of a plurality of FLs or BWPs, from each of a plurality of positioning resource sets, or combinations thereof; and perform a positioning measurement using the synthetic positioning resource.

In an aspect, a UE includes a memory; at least one transceiver; and at least one processor communicatively coupled to the memory and the at least one transceiver, the at least one processor configured to: receive a positioning resource configuration that defines an aggregate positioning resource comprising a plurality of positioning resource blocks that differ from each other in a time domain, in a frequency domain, or both; and perform a positioning measurement using the aggregate positioning resource.

In an aspect, a base station includes a memory; at least one transceiver; and at least one processor communicatively coupled to the memory and the at least one transceiver, the at least one processor configured to: receive, from a location server, a RRC configuration that defines a synthetic positioning resource comprising a plurality of positioning resources, the plurality of positioning resources comprising at least one positioning resource from each of a plurality of FLs or BWPs, from each of a plurality of positioning resource sets, or combinations thereof; and send the RRC configuration to a UE.

In an aspect, a base station includes a memory; at least one transceiver; and at least one processor communicatively coupled to the memory and the at least one transceiver, the at least one processor configured to: receive, from a location server, a positioning resource configuration that defines an aggregate positioning resource comprising a plurality of positioning resource blocks that differ from each other in a time domain, in a frequency domain, or both; and send the positioning resource configuration to a UE.

In an aspect, a location server includes a memory; at least one transceiver; and at least one processor communicatively coupled to the memory and the at least one transceiver, the at least one processor configured to: determine a RRC configuration that defines a synthetic positioning resource comprising a plurality of positioning resources, the plurality of positioning resources comprising at least one positioning resource from each of a plurality of FLs or BWPs, from each of a plurality of positioning resource sets, or combinations thereof; and send the RRC configuration to a base station.

In an aspect, a location server includes a memory; at least one transceiver; and at least one processor communicatively coupled to the memory and the at least one transceiver, the at least one processor configured to: determine a positioning resource configuration that defines an aggregate positioning resource comprising a plurality of positioning resource blocks that differ from each other in a time domain, in a frequency domain, or both; and send the positioning resource configuration to a base station.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A and 2B illustrate example wireless network structures, according to aspects of the disclosure.
FIGS. 3A to 3C are simplified block diagrams of several sample aspects of components that may be employed in a user equipment (UE), a base station, and a network entity, respectively, and configured to support communications as taught herein.
FIG. 4 is a diagram of an example positioning reference signal (PRS) configuration for the PRS transmissions of a given base station, according to aspects of the disclosure.
FIGS. 5A to 5D are diagrams illustrating example frame structures and channels within the frame structures, according to aspects of the disclosure.
FIG. 6 illustrates conventional radio resource control (RRC) configuration for DL-PRS.
FIGS. 7A and 7B illustrate two forms of PRS band stitching.
FIG. 8 illustrates PRS stitching according to some aspects of the present disclosure, in which multiple FLs are stitched together.
FIG. 9 illustrates PRS stitching according to some aspects of the present disclosure, in which PRS resources are stitched together at the FL level, at the PRS resource set level, and at the PRS resource level.
FIGS. 10A and 10B illustrate some limitations of conventional networks.
FIGS. 11A-11E illustrate aggregate PRS blocks according to some aspects of the present disclosure.
FIGS. 12 to 17 illustrate example methods of wireless communication, according to aspects of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage, or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, consumer asset tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the Institute of Electrical and Electronics Engineers (IEEE) 802.11 specification, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal.

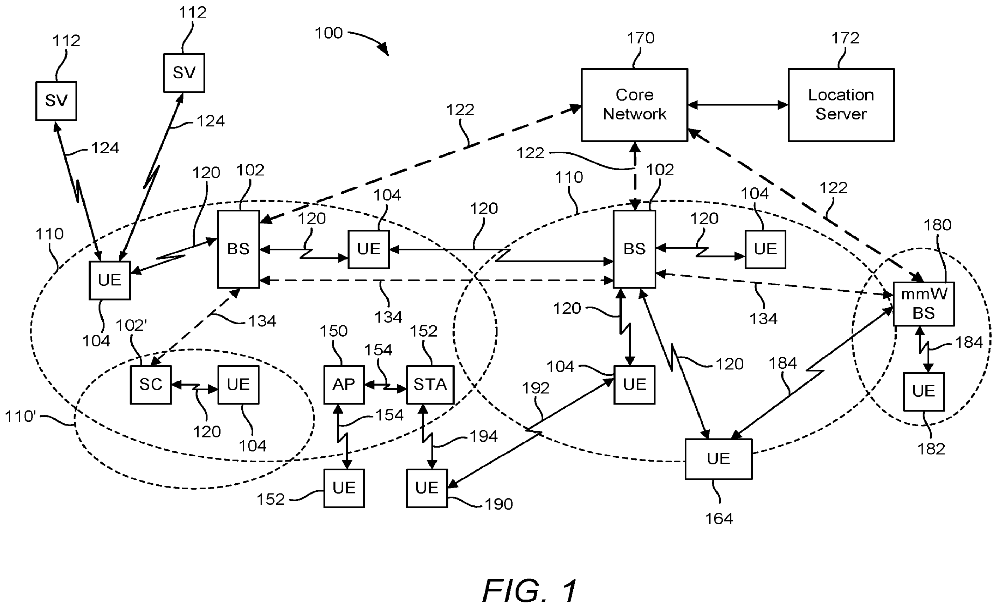

FIG. 1 illustrates an example wireless communications system 100. The wireless communications system 100 (which may also be referred to as a wireless wide area network (WWAN)) may include various base stations 102 and various UEs 104. The base stations 102 may include macro cell base stations (high power cellular base stations) and/or small cell base stations (low power cellular base stations). In an aspect, the macro cell base station may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (which may be part of core network 170 or may be external to core network 170). In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), a virtual cell identifier (VCI), a cell global identifier (CGI)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell (SC) base station 102' may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a target reference RF signal on a target beam can be derived from information about a source reference RF signal on a source beam. If the source reference RF signal is QCL Type A, the receiver can use the source reference RF signal to estimate the Doppler shift, Doppler spread, average delay, and delay spread of a target reference RF signal transmitted on the same channel. If the source reference RF signal is QCL Type B, the receiver can use the source reference RF signal to estimate the Doppler shift and Doppler spread of a target reference RF signal transmitted on the same channel. If the source reference RF signal is QCL Type C, the receiver can use the source reference RF signal to estimate the Doppler shift and average delay of a target reference RF signal transmitted on the same channel. If the source reference RF signal is QCL Type D, the receiver can use the source reference RF signal to estimate the spatial receive parameter of a target reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Receive beams may be spatially related. A spatial relation means that parameters for a transmit beam for a second reference signal can be derived from information about a receive beam for a first reference signal. For example, a UE may use a particular receive beam to receive one or more reference downlink reference signals (e.g., positioning reference signals (PRS), tracking reference signals (TRS), phase tracking reference signal (PTRS), cell-specific reference signals (CRS), channel state information reference signals (CSI-RS), primary synchronization signals (PSS), secondary synchronization signals (SSS), synchronization signal blocks (SSBs), etc.) from a base station. The UE can then form a transmit beam for sending one or more uplink reference signals (e.g., uplink positioning reference signals (UL-PRS), sounding reference signal (SRS), demodulation reference signals (DMRS), PTRS, etc.) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

In the example of FIG. 1, one or more Earth orbiting satellite positioning system (SPS) space vehicles (SVs) 112 (e.g., satellites) may be used as an independent source of location information for any of the illustrated UEs (shown in FIG. 1 as a single UE 104 for simplicity). A UE 104 may include one or more dedicated SPS receivers specifically designed to receive SPS signals 124 for deriving geo location information from the SVs 112. An SPS typically includes a system of transmitters (e.g., SVs 112) positioned to enable receivers (e.g., UEs 104) to determine their location on or above the Earth based, at least in part, on signals (e.g., SPS signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104.

The use of SPS signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multi-functional Satellite Augmentation System (MSAS), the Global Positioning System (GPS) Aided Geo Augmented Navigation or GPS and Geo Augmented Navigation system (GAGAN), and/or the like. Thus, as used herein, an SPS may include any combination of one or more global and/or regional navigation satellite systems and/or augmentation systems, and SPS signals 124 may include SPS, SPS-like, and/or other signals associated with such one or more SPS.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

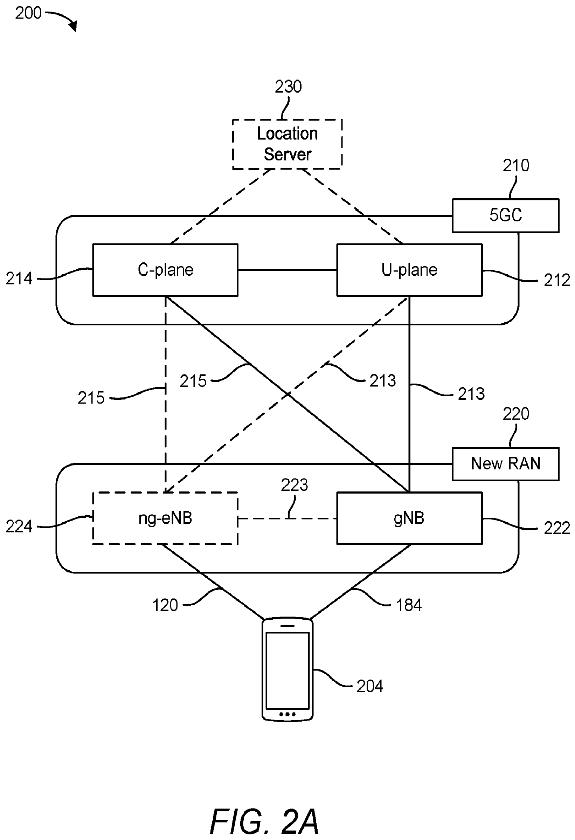

FIG. 2A illustrates an example wireless network structure 200. For example, a 5GC 210 (also referred to as a Next Generation Core (NGC)) can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the control plane functions 214 and user plane functions 212. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, the New RAN 220 may only have one or more gNBs 222, while other configurations include one or more of both ng-eNBs 224 and gNBs 222. Either gNB 222 or ng-eNB 224 may communicate with UEs 204 (e.g., any of the UEs depicted in FIG. 1). Another optional aspect may include location server 230, which may be in communication with the 5GC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network.

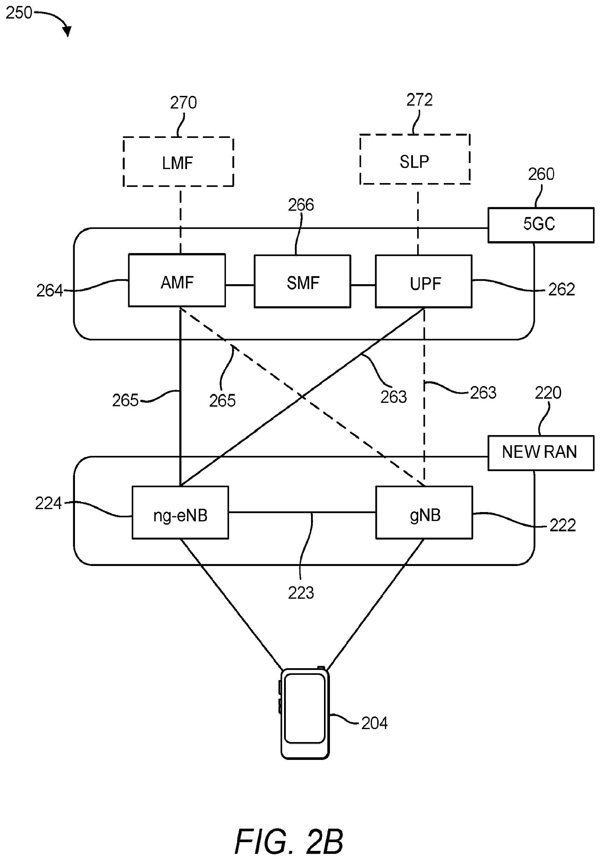

FIG. 2B illustrates another example wireless network structure 250. For example, a 5GC 260 can be viewed functionally as control plane functions, provided by an access and mobility management function (AMF) 264, and user plane functions, provided by a user plane function (UPF) 262, which operate cooperatively to form the core network (i.e., 5GC 260). User plane interface 263 and control plane interface 265 connect the ng-eNB 224 to the 5GC 260 and specifically to UPF 262 and AMF 264, respectively. In an additional configuration, a gNB 222 may also be connected to the 5GC 260 via control plane interface 265 to AMF 264 and user plane interface 263 to UPF 262. Further, ng-eNB 224 may directly communicate with gNB 222 via the backhaul connection 223, with or without gNB direct connectivity to the 5GC 260. In some configurations, the New RAN 220 may only have one or more gNBs 222, while other configurations include one or more of both ng-eNBs 224 and gNBs 222. Either gNB 222 or ng-eNB 224 may communicate with UEs 204 (e.g., any of the UEs depicted in FIG. 1). The base stations of the New RAN 220 communicate with the AMF 264 over the N2 interface and with the UPF 262 over the N3 interface.

The functions of the AMF 264 include registration management, connection management, reachability management, mobility management, lawful interception, transport for session management (SM) messages between the UE 204 and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the New RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as a secure user plane location (SUPL) location platform (SLP) 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, New RAN 220, and UEs 204 over a control plane (e.g., using interfaces and protocols intended to convey signaling messages and not voice or data), the SLP 272 may communicate with UEs 204 and external clients (not shown in FIG. 2B) over a user plane (e.g., using protocols intended to carry voice and/or data like the transmission control protocol (TCP) and/or IP).

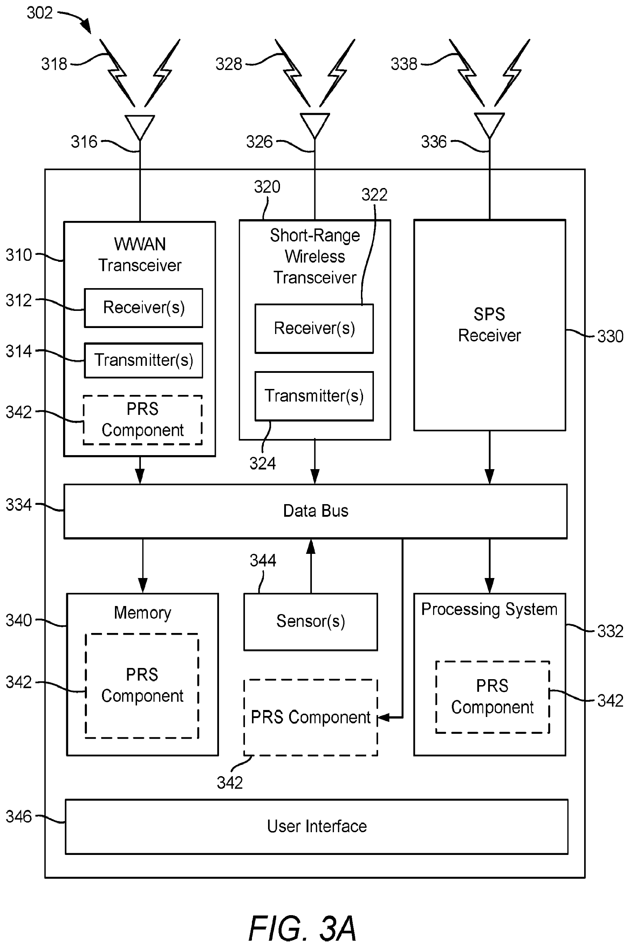

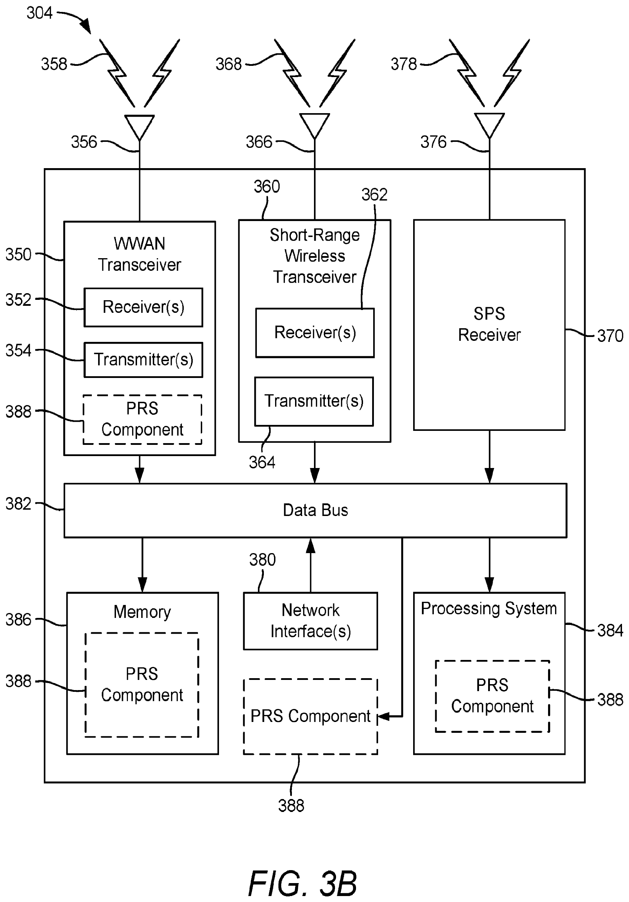

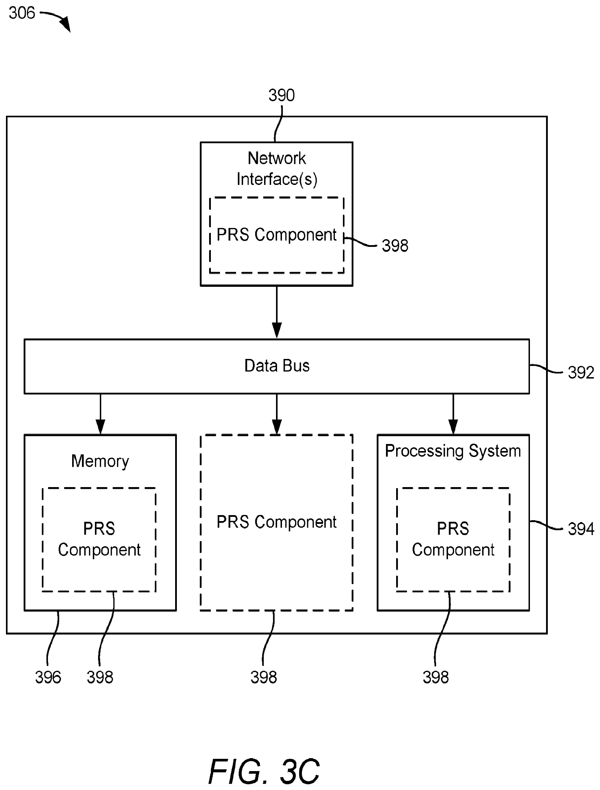

FIGS. 3A, 3B, and 3C illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270) to support the file transmission operations as taught herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include wireless wide area network (WWAN) transceiver 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, or vehicle-to-vehicle (V2V) and/or vehicle-to-everything (V2X) transceivers.

Transceiver circuitry including at least one transmitter and at least one receiver may comprise an integrated device (e.g., embodied as a transmitter circuit and a receiver circuit of a single communication device) in some implementations, may comprise a separate transmitter device and a separate receiver device in some implementations, or may be embodied in other ways in other implementations. In an aspect, a transmitter may include or be coupled to a plurality of antennas (e.g., antennas 316, 326, 356, 366), such as an antenna array, that permits the respective apparatus to perform transmit "beamforming," as described herein. Similarly, a receiver may include or be coupled to a plurality of antennas (e.g., antennas 316, 326, 356, 366), such as an antenna array, that permits the respective apparatus to perform receive beamforming, as described herein. In an aspect, the transmitter and receiver may share the same plurality of antennas (e.g., antennas 316, 326, 356, 366), such that the respective apparatus can only receive or transmit at a given time, not both at the same time. A wireless communication device (e.g., one or both of the transceivers 310 and 320 and/or 350 and 360) of the UE 302 and/or the base station 304 may also comprise a network listen module (NLM) or the like for performing various measurements.

The UE 302 and the base station 304 also include, at least in some cases, satellite positioning systems (SPS) receivers 330 and 370. The SPS receivers 330 and 370 may be connected to one or more antennas 336 and 376, respectively, and may provide means for receiving and/or measuring SPS signals 338 and 378, respectively, such as global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. The SPS receivers 330 and 370 may comprise any suitable hardware and/or software for receiving and processing SPS signals 338 and 378, respectively. The SPS receivers 330 and 370 request information and operations as appropriate from the other systems, and performs calculations necessary to determine positions of the UE 302 and the base station 304 using measurements obtained by any suitable SPS algorithm.

The base station 304 and the network entity 306 each include at least one network interfaces 380 and 390, respectively, providing means for communicating (e.g., means for transmitting, means for receiving, etc.) with other network entities. For example, the network interfaces 380 and 390 (e.g., one or more network access ports) may be configured to communicate with one or more network entities via a wire-based or wireless backhaul connection. In some aspects, the network interfaces 380 and 390 may be implemented as transceivers configured to support wire-based or wireless signal communication. This communication may involve, for example, sending and receiving messages, parameters, and/or other types of information.

The UE 302, the base station 304, and the network entity 306 also include other components that may be used in conjunction with the operations as disclosed herein. The UE 302 includes processor circuitry implementing a processing system 332 for providing functionality relating to, for example, wireless positioning, and for providing other processing functionality. The base station 304 includes a processing system 384 for providing functionality relating to, for example, wireless positioning as disclosed herein, and for providing other processing functionality. The network entity 306 includes a processing system 394 for providing functionality relating to, for example, wireless positioning as disclosed herein, and for providing other processing functionality. The processing systems 332, 384, and 394 may therefore provide means for processing, such as means for determining, means for calculating, means for receiving, means for transmitting, means for indicating, etc. In an aspect, the processing systems 332, 384, and 394 may include, for example, one or more processors, such as one or more general purpose processors, multi-core processors, ASICs, digital signal processors (DSPs), field programmable gate arrays (FPGA), other programmable logic devices or processing circuitry, or various combinations thereof.

The UE 302, the base station 304, and the network entity 306 include memory circuitry implementing memory components 340, 386, and 396 (e.g., each including a memory device), respectively, for maintaining information (e.g., information indicative of reserved resources, thresholds, parameters, and so on). The memory components 340, 386, and 396 may therefore provide means for storing, means for retrieving, means for maintaining, etc. In some cases, the UE 302, the base station 304, and the network entity 306 may include PRS components 342, 388, and 398, respectively. The PRS components 342, 388, and 398 may be hardware circuits that are part of or coupled to the processing systems 332, 384, and 394, respectively, that, when executed, cause the UE 302, the base station 304, and the network entity 306 to perform the functionality described herein. In other aspects, the PRS components 342, 388, and 398 may be external to the processing systems 332, 384, and 394 (e.g., part of a modem processing system, integrated with another processing system, etc.). Alternatively, the PRS components 342, 388, and 398 may be memory modules stored in the memory components 340, 386, and 396, respectively, that, when executed by the processing systems 332, 384, and 394 (or a modem processing system, another processing system, etc.), cause the UE 302, the base station 304, and the network entity 306 to perform the functionality described herein. FIG. 3A illustrates possible locations of the PRS component 342, which may be part of the WWAN transceiver 310, the memory component 340, the processing system 332, or any combination thereof, or may be a standalone component. FIG. 3B illustrates possible locations of the PRS component 388, which may be part of the WWAN transceiver 350, the memory component 386, the processing system 384, or any combination thereof, or may be a standalone component. FIG. 3C illustrates possible locations of the PRS component 398, which may be part of the network interface(s) 390, the memory component 396, the processing system 394, or any combination thereof, or may be a standalone component.

The UE 302 may include one or more sensors 344 coupled to the processing system 332 to provide means for sensing or detecting movement and/or orientation information that is independent of motion data derived from signals received by the WWAN transceiver 310, the short-range wireless transceiver 320, and/or the SPS receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in 2D and/or 3D coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the processing system 384 in more detail, in the downlink, IP packets from the network entity 306 may be provided to the processing system 384. The processing system 384 may implement functionality for an RRC layer, a packet data convergence protocol (PDCP) layer, a radio link control (RLC) layer, and a medium access control (MAC) layer. The processing system 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the processing system 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the processing system 332, which implements Layer-3 (L3) and Layer-2 (L2) functionality.

In the uplink, the processing system 332 provides demultiplexing between transport and logical channels, packet reassembly, deciphering, header decompression, and control signal processing to recover IP packets from the core network. The processing system 332 is also responsible for error detection.

Similar to the functionality described in connection with the downlink transmission by the base station 304, the processing system 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the processing system 384.

In the uplink, the processing system 384 provides demultiplexing between transport and logical channels, packet reassembly, deciphering, header decompression, control signal processing to recover IP packets from the UE 302. IP packets from the processing system 384 may be provided to the core network. The processing system 384 is also responsible for error detection.

For convenience, the UE 302, the base station 304, and/or the network entity 306 are shown in FIGS. 3A-C as including various components that may be configured according to the various examples described herein. It will be appreciated, however, that the illustrated blocks may have different functionality in different designs.

The various components of the UE 302, the base station 304, and the network entity 306 may communicate with each other over data buses 334, 382, and 392, respectively. The components of FIGS. 3A-C may be implemented in various ways. In some implementations, the components of FIGS. 3A-C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processing systems 332, 384, 394, the transceivers 310, 320, 350, and 360, the memory components 340, 386, and 396, the PRS components 342, 388, and 398, etc.

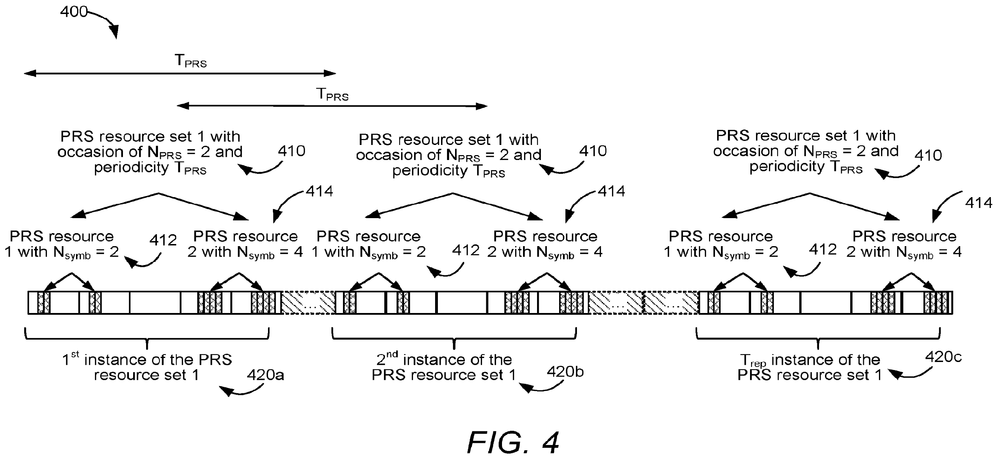

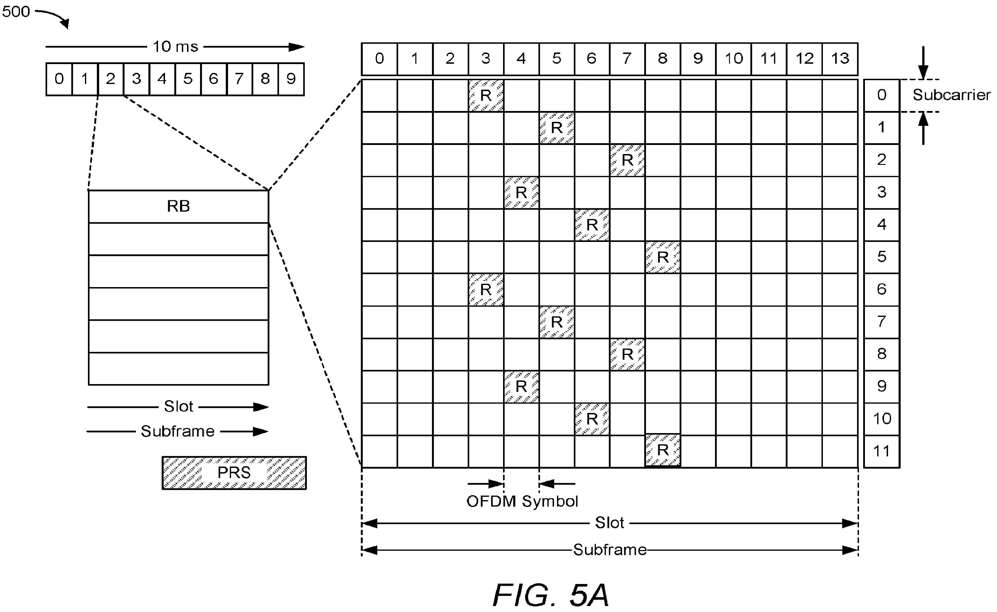

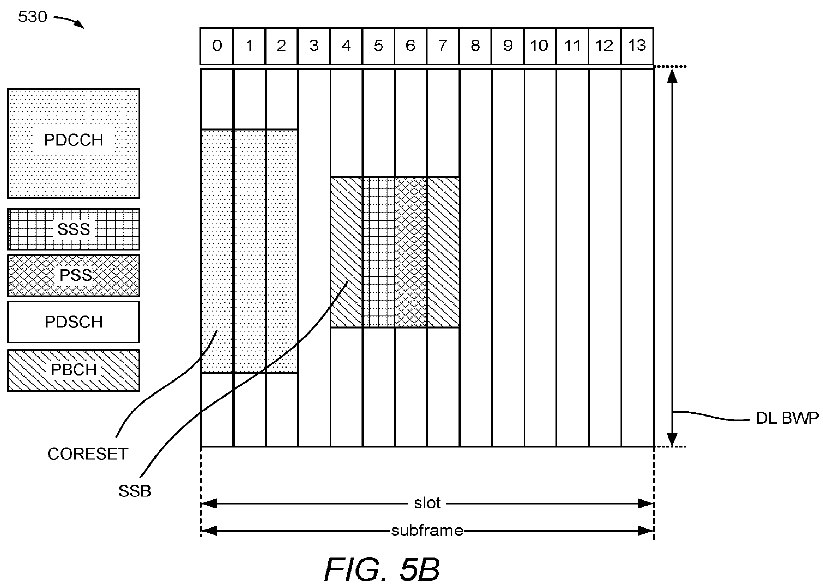

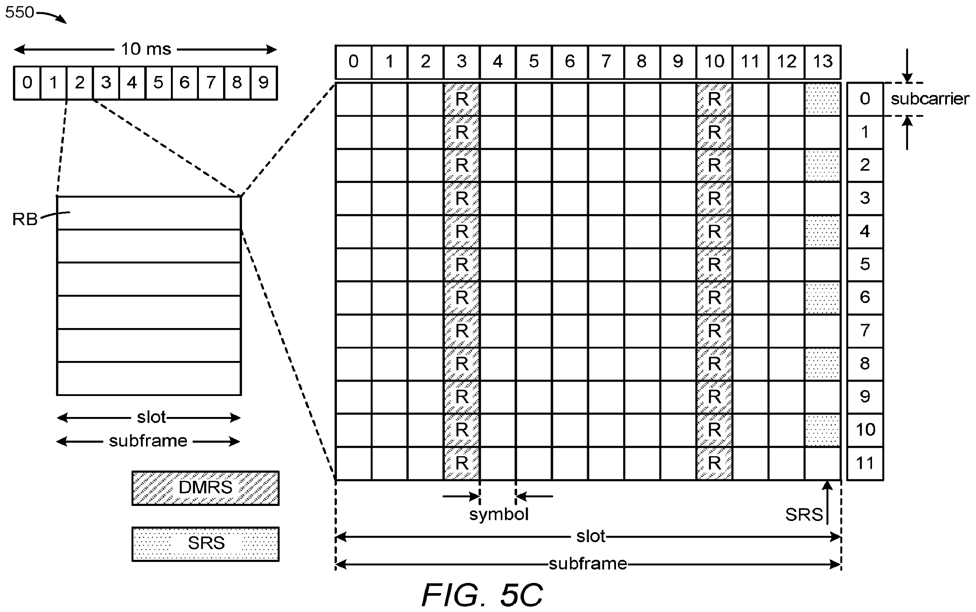

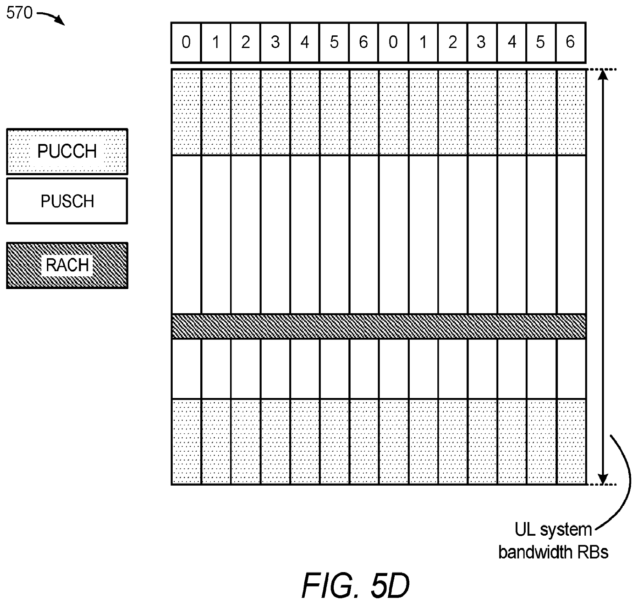

FIG. 4 is a diagram of an example PRS configuration 400 for the PRS transmissions of a given base station, according to aspects of the disclosure. In FIG. 4, time is represented horizontally, increasing from left to right. Each long rectangle represents a slot and each short (shaded) rectangle represents an OFDM symbol. In the example of FIG. 4, a PRS resource set 410 includes two PRS resources, a first PRS resource 412 (labeled "PRS resource 1" in FIG. 5) and a second PRS resource 514 (labeled "PRS resource 2" in FIG. 5). The base station transmits PRS on the PRS resources 412 and 414 of the PRS resource set 410.

The PRS resource set 410 has an occasion length (N_PRS) of two slots and a periodicity (T_PRS) of, for example, 160 slots or 160 milliseconds (ms) (for 15 kHz subcarrier spacing). As such, both the PRS resources 412 and 414 are two consecutive slots in length and repeat every T_PRS slots, starting from the slot in which the first symbol of the respective PRS resource occurs. In the example of FIG. 4, the PRS resource 412 has a symbol length (N_symb) of two symbols, and the PRS resource 414 has a symbol length (N_symb) of four symbols. The PRS resource 412 and the PRS resource 414 may be transmitted on separate beams of the same base station.

Each instance of the PRS resource set 410, illustrated as instances 420a, 420b, and 420c, includes an occasion of length '2' (i.e., N_PRS=2) for each PRS resource 412, 414 of the PRS resource set. The PRS resources 412 and 414 are repeated every T_PRS slots up to the muting sequence periodicity T_REP. As such, a bitmap of length T_REP would be needed to indicate which occasions of instances 420a, 420b, and 420c are muted (i.e., not transmitted).

In an aspect, there may be additional constraints on the PRS configuration 400. For example, for all PRS resources (e.g., PRS resources 412, 414) of a PRS resource set (e.g., PRS resource set 410), the base station can configure the following parameters to be the same: (a) the occasion length (T_PRS), (b) the number of symbols (N_symb), (c) the comb type, and/or (d) the bandwidth. In addition, for all PRS resources of all PRS resource sets, the subcarrier spacing and the cyclic prefix can be configured to be the same for one base station or for all base stations. Whether it is for one base station or all base stations may depend on the UE's capability to support the first and/or second option.

FIGS. 5A to 5D are diagrams illustrating example frame structures and channels within the frame structures, according to aspects of the disclosure. FIG. 5A is a diagram 500 illustrating an example of a downlink frame structure, according to aspects of the disclosure. FIG. 5B is a diagram 530 illustrating an example of channels within the downlink frame structure, according to aspects of the disclosure. FIG. 5C is a diagram 550 illustrating an example of an uplink frame structure, according to aspects of the disclosure. FIG. 5D is a diagram 570 illustrating an example of channels within an uplink frame structure, according to aspects of the disclosure. Other wireless communications technologies may have different frame structures and/or different channels.

LTE, and in some cases NR, utilizes OFDM on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kilohertz (kHz) and the minimum resource allocation (resource block) may be 12 subcarriers (or 180 kHz). Consequently, the nominal FFT size may be equal to 128, 256, 512, 1024, or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10, or 20 MHz, respectively.

LTE supports a single numerology (subcarrier spacing (SCS), symbol length, etc.). In contrast, NR may support multiple numerologies (µ), for example, subcarrier spacings of 15 kHz (µ=0), 30 kHz (µ=1), 60 kHz (µ=2), 120 kHz (µ=3), and 240 kHz (µ=4) or greater may be available. In each subcarrier spacing, there are 14 symbols per slot. For 15 kHz SCS (µ=0), there is one slot per subframe, 10 slots per frame, the slot duration is 1 millisecond (ms), the symbol duration is 66.7 microseconds (µs), and the maximum nominal system bandwidth (in MHz) with a 4K FFT size is 50. For 30 kHz SCS (µ=1), there are two slots per subframe, 20 slots per frame, the slot duration is 0.5 ms, the symbol duration is 33.3 µs, and the maximum nominal system bandwidth (in MHz) with a 4K FFT size is 100. For 60 kHz SCS (µ=2), there are four slots per subframe, 40 slots per frame, the slot duration is 0.25 ms, the symbol duration is 16.7 µs, and the maximum nominal system bandwidth (in MHz) with a 4K FFT size is 200. For 120 kHz SCS (µ=3), there are eight slots per subframe, 80 slots per frame, the slot duration is 0.125 ms, the symbol duration is 8.33 µs, and the maximum nominal system bandwidth (in MHz) with a 4K FFT size is 400. For 240 kHz SCS (µ=4), there are 16 slots per subframe, 160 slots per frame, the slot duration is 0.0625 ms, the symbol duration is 4.17 µs, and the maximum nominal system bandwidth (in MHz) with a 4K FFT size is 800.

In the example of FIGS. 5A to 5D, a numerology of 15 kHz is used. Thus, in the time domain, a 10 ms frame is divided into 10 equally sized subframes of 1 ms each, and each subframe includes one time slot. In FIGS. 5A to 5D, time is represented horizontally (on the X axis) with time increasing from left to right, while frequency is represented vertically (on the Y axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In the numerology of FIGS. 5A to 5D, for a normal cyclic prefix, an RB may contain 12 consecutive subcarriers in the frequency domain and seven consecutive symbols in the time domain, for a total of 84 REs. For an extended cyclic prefix, an RB may contain 12 consecutive subcarriers in the frequency domain and six consecutive symbols in the time domain, for a total of 72 REs. The number of bits carried by each RE depends on the modulation scheme.

Some of the REs carry downlink reference (pilot) signals (DL-RS). The DL-RS may include PRS, TRS, PTRS, CRS, CSI-RS, DMRS, PSS, SSS, SSB, etc. FIG. 5A illustrates example locations of REs carrying PRS (labeled "R").

A collection of resource elements (REs) that are used for transmission of PRS is referred to as a "PRS resource." The collection of resource elements can span multiple PRBs in the frequency domain and 'N' (such as 1 or more) consecutive symbol(s) within a slot in the time domain. In a given OFDM symbol in the time domain, a PRS resource occupies consecutive PRBs in the frequency domain.

The transmission of a PRS resource within a given PRB has a particular comb size (also referred to as the "comb density"). A comb size 'N' represents the subcarrier spacing (or frequency/tone spacing) within each symbol of a PRS resource configuration. Specifically, for a comb size 'N,' PRS are transmitted in every Nth subcarrier of a symbol of a PRB. For example, for comb-4, for each symbol of the PRS resource configuration, REs corresponding to every fourth subcarrier (such as subcarriers 0, 4, 8) are used to transmit PRS of the PRS resource. Currently, comb sizes of comb-2, comb-4, comb-6, and comb-12 are supported for DL-PRS. FIG. 5A illustrates an example PRS resource configuration for comb-6 (which spans six symbols). That is, the locations of the shaded REs (labeled "R") indicate a comb-6 PRS resource configuration.

Currently, a DL-PRS resource may span 2, 4, 6, or 12 consecutive symbols within a slot with a fully frequency-domain staggered pattern. A DL-PRS resource can be configured in any higher layer configured downlink or flexible (FL) symbol of a slot. There may be a constant energy per resource element (EPRE) for all REs of a given DL-PRS resource. The following are the frequency offsets from symbol to symbol for comb sizes 2, 4, 6, and 12 over 2, 4, 6, and 12 symbols. 2-symbol comb-2: {0, 1}; 4-symbol comb-2: {0, 1, 0, 1}; 6-symbol comb-2: {0, 1, 0, 1, 0, 1}; 12-symbol comb-2: {0, 1, 0, 1, 0, 1, 0, 1, 0, 1, 0, 1}; 4-symbol comb-4: {0, 2, 1, 3}; 12-symbol comb-4: {0, 2, 1, 3, 0, 2, 1, 3, 0, 2, 1, 3}; 6-symbol comb-6: {0, 3, 1, 4, 2, 5}; 12-symbol comb-6: {0, 3, 1, 4, 2, 5, 0, 3, 1, 4, 2, 5}; and 12-symbol comb-12: {0, 6, 3, 9, 1, 7, 4, 10, 2, 8, 5, 11}.

A "PRS resource set" is a set of PRS resources used for the transmission of PRS signals, where each PRS resource has a PRS resource ID. In addition, the PRS resources in a PRS resource set are associated with the same TRP. A PRS resource set is identified by a PRS resource set ID and is associated with a particular TRP (identified by a TRP ID). In addition, the PRS resources in a PRS resource set have the same periodicity, a common muting pattern configuration, and the same repetition factor (such as "PRS-ResourceRepetitionFactor") across slots. The periodicity is the time from the first repetition of the first PRS resource of a first PRS instance to the same first repetition of the same first PRS resource of the next PRS instance. The periodicity may have a length selected from 2^µ*{4, 5, 8, 10, 16, 20, 32, 40, 64, 80, 160, 320, 640, 1280, 2560, 5120, 10240} slots, with µ = 0, 1, 2, 3. The repetition factor may have a length selected from {1, 2, 4, 6, 8, 16, 32} slots.

A PRS resource ID in a PRS resource set is associated with a single beam (or beam ID) transmitted from a single TRP (where a TRP may transmit one or more beams). That is, each PRS resource of a PRS resource set may be transmitted on a different beam, and as such, a "PRS resource," or simply "resource," also can be referred to as a "beam." Note that this does not have any implications on whether the TRPs and the beams on which PRS are transmitted are known to the UE.

A "PRS instance" or "PRS occasion" is one instance of a periodically repeated time window (such as a group of one or more consecutive slots) where PRS are expected to be transmitted. A PRS occasion also may be referred to as a "PRS positioning occasion," a "PRS positioning instance, a "positioning occasion," "a positioning instance," a "positioning repetition," or simply an "occasion," an "instance," or a "repetition."

A "positioning frequency layer" (also referred to simply as a "frequency layer") is a collection of one or more PRS resource sets across one or more TRPs that have the same values for certain parameters. Specifically, the collection of PRS resource sets has the same subcarrier spacing and cyclic prefix (CP) type (meaning all numerologies supported for the PDSCH are also supported for PRS), the same Point A, the same value of the downlink PRS bandwidth, the same start PRB (and center frequency), and the same comb-size. The Point A parameter takes the value of the parameter "ARFCN-ValueNR" (where "ARFCN" stands for "absolute radio-frequency channel number") and is an identifier/code that specifies a pair of physical radio channel used for transmission and reception. The downlink PRS bandwidth may have a granularity of four PRBs, with a minimum of 24 PRBs and a maximum of 272 PRBs. Currently, up to four frequency layers have been defined, and up to two PRS resource sets may be configured per TRP per frequency layer.

The concept of a frequency layer is somewhat like the concept of component carriers and bandwidth parts (BWPs), but different in that component carriers and BWPs are used by one base station (or a macro cell base station and a small cell base station) to transmit data channels, while frequency layers are used by several (usually three or more) base stations to transmit PRS. A UE may indicate the number of frequency layers it can support when it sends the network its positioning capabilities, such as during an LTE positioning protocol (LPP) session. For example, a UE may indicate whether it can support one or four positioning frequency layers.

FIG. 5B illustrates an example of various channels within a downlink slot of a radio frame. In NR, the channel bandwidth, or system bandwidth, is divided into multiple BWPs. A BWP is a contiguous set of PRBs selected from a contiguous subset of the common RBs for a given numerology on a given carrier. Generally, a maximum of four BWPs can be specified in the downlink and uplink. That is, a UE can be configured with up to four BWPs on the downlink, and up to four BWPs on the uplink. Only one BWP (uplink or downlink) may be active at a given time, meaning the UE may only receive or transmit over one BWP at a time. On the downlink, the bandwidth of each BWP should be equal to or greater than the bandwidth of the SSB, but it may or may not contain the SSB.

Referring to FIG. 5B, a primary synchronization signal (PSS) is used by a UE to determine subframe/symbol timing and a physical layer identity. A secondary synchronization signal (SSS) is used by a UE to determine a physical layer cell identity group number and radio frame timing. Based on the physical layer identity and the physical layer cell identity group number, the UE can determine a PCI. Based on the PCI, the UE can determine the locations of the aforementioned DL-RS. The physical broadcast channel (PBCH), which carries an MIB, may be logically grouped with the PSS and SSS to form an SSB (also referred to as an SS/PBCH). The MIB provides a number of RBs in the downlink system bandwidth and a system frame number (SFN). The physical downlink shared channel (PDSCH) carries user data, broadcast system information not transmitted through the PBCH, such as system information blocks (SIBs), and paging messages.

The physical downlink control channel (PDCCH) carries downlink control information (DCI) within one or more control channel elements (CCEs), each CCE including one or more RE group (REG) bundles (which may span multiple symbols in the time domain), each REG bundle including one or more REGs, each REG corresponding to 12 resource elements (one resource block) in the frequency domain and one OFDM symbol in the time domain. The set of physical resources used to carry the PDCCH/DCI is referred to in NR as the control resource set (CORESET). In NR, a PDCCH is confined to a single CORESET and is transmitted with its own DMRS. This enables UE-specific beamforming for the PDCCH.

In the example of FIG. 5B, there is one CORESET per BWP, and the CORESET spans three symbols (although it may be only one or two symbols) in the time domain. Unlike LTE control channels, which occupy the entire system bandwidth, in NR, PDCCH channels are localized to a specific region in the frequency domain (i.e., a CORESET). Thus, the frequency component of the PDCCH shown in FIG. 5B is illustrated as less than a single BWP in the frequency domain. Note that although the illustrated CORESET is contiguous in the frequency domain, it need not be. In addition, the CORESET may span less than three symbols in the time domain.

The DCI within the PDCCH carries information about uplink resource allocation (persistent and non-persistent) and descriptions about downlink data transmitted to the UE, referred to as uplink and downlink grants, respectively. More specifically, the DCI indicates the resources scheduled for the downlink data channel (e.g., PDSCH) and the uplink data channel (e.g., PUSCH). Multiple (e.g., up to eight) DCIs can be configured in the PDCCH, and these DCIs can have one of multiple formats. For example, there are different DCI formats for uplink scheduling, for downlink scheduling, for uplink transmit power control (TPC), etc. A PDCCH may be transported by 1, 2, 4, 8, or 16 CCEs in order to accommodate different DCI payload sizes or coding rates.

As illustrated in FIG. 5C, some of the REs (labeled "R") carry DMRS for channel estimation at the receiver (e.g., a base station, another UE, etc.). A UE may additionally transmit SRS in, for example, the last symbol of a slot. The SRS may have a comb structure, and a UE may transmit SRS on one of the combs. In the example of FIG. 5C, the illustrated SRS is comb-2 over one symbol. The SRS may be used by a base station to obtain the channel state information (CSI) for each UE. CSI describes how an RF signal propagates from the UE to the base station and represents the combined effect of scattering, fading, and power decay with distance. The system uses the SRS for resource scheduling, link adaptation, massive MIMO, beam management, etc.

Currently, an SRS resource may span 1, 2, 4, 8, or 12 consecutive symbols within a slot with a comb size of comb-2, comb-4, or comb-8. The following are the frequency offsets from symbol to symbol for the SRS comb patterns that are currently supported. 1-symbol comb-2: {0}; 2-symbol comb-2: {0, 1}; 4-symbol comb-2: {0, 1, 0, 1}; 4-symbol comb-4: {0, 2, 1, 3}; 8-symbol comb-4: {0, 2, 1, 3, 0, 2, 1, 3}; 12-symbol comb-4: {0, 2, 1, 3, 0, 2, 1, 3, 0, 2, 1, 3}; 4-symbol comb-8: {0, 4, 2, 6}; 8-symbol comb-8: {0, 4, 2, 6, 1, 5, 3, 7}; and 12-symbol comb-8: {0, 4, 2, 6, 1, 5, 3, 7, 0, 4, 2, 6}.

A collection of resource elements that are used for transmission of SRS is referred to as an "SRS resource," and may be identified by the parameter "SRS-ResourceId."" The collection of resource elements can span multiple PRBs in the frequency domain and N (e.g., one or more) consecutive symbol(s) within a slot in the time domain. In a given OFDM symbol, an SRS resource occupies consecutive PRBs. An "SRS resource set" is a set of SRS resources used for the transmission of SRS signals, and is identified by an SRS resource set ID ("SRS-ResourceSetId").

Generally, a UE transmits SRS to enable the receiving base station (either the serving base station or a neighboring base station) to measure the channel quality between the UE and the base station. However, SRS also can be used as uplink positioning reference signals for uplink positioning procedures, such as UL-TDOA, multi-RTT, DL-AoA, etc.

Several enhancements over the previous definition of SRS have been proposed for SRS-for-positioning (also referred to as "UL-PRS"), such as a new staggered pattern within an SRS resource (except for single-symbol/comb-2), a new comb type for SRS, new sequences for SRS, a higher number of SRS resource sets per component carrier, and a higher number of SRS resources per component carrier. In addition, the parameters "SpatialRelationInfo" and "PathLossReference" are to be configured based on a downlink reference signal or SSB from a neighboring TRP. Further still, one SRS resource may be transmitted outside the active BWP, and one SRS resource may span across multiple component carriers. Also, SRS may be configured in RRC connected state and only transmitted within an active BWP. Further, there may be no frequency hopping, no repetition factor, a single antenna port, and new lengths for SRS (e.g., 8 and 12 symbols). There also may be open-loop power control and not closed-loop power control, and comb-8 (i.e., an SRS transmitted every eighth subcarrier in the same symbol) may be used. Lastly, the UE may transmit through the same transmit beam from multiple SRS resources for UL-AoA. All of these are features that are additional to the current SRS framework, which is configured through RRC higher layer signaling (and potentially triggered or activated through MAC control element (CE) or DCI).

FIG. 5D illustrates an example of various channels within an uplink slot of a frame, according to aspects of the disclosure. A random-access channel (RACH), also referred to as a physical random-access channel (PRACH), may be within one or more slots within a frame based on the PRACH configuration. The PRACH may include six consecutive RB pairs within a slot. The PRACH allows the UE to perform initial system access and achieve uplink synchronization. A physical uplink control channel (PUCCH) may be located on edges of the uplink system bandwidth. The PUCCH carries uplink control information (UCI), such as scheduling requests, CSI reports, a channel quality indicator (CQI), a precoding matrix indicator (PMI), a rank indicator (RI), and HARQ ACK/NACK feedback. The physical uplink shared channel (PUSCH) carries data, and may additionally be used to carry a buffer status report (BSR), a power headroom report (PHR), and/or UCI.

Note that the terms "positioning reference signal" and "PRS" generally refer to specific reference signals that are used for positioning in NR and LTE systems. However, as used herein, the terms "positioning reference signal" and "PRS" may also refer to any type of reference signal that can be used for positioning, such as but not limited to, PRS as defined in LTE and NR, TRS, PTRS, CRS, CSI-RS, DMRS, PSS, SSS, SSB, SRS, UL-PRS, etc. In addition, the terms "positioning reference signal" and "PRS" may refer to downlink or uplink positioning reference signals, unless otherwise indicated by the context. If needed to further distinguish the type of PRS, a downlink positioning reference signal may be referred to as a "DL-PRS," and an uplink positioning reference signal (e.g., an SRS-for-positioning, PTRS) may be referred to as an "UL-PRS." In addition, for signals that may be transmitted in both the uplink and downlink (e.g., DMRS, PTRS), the signals may be prepended with "UL" or "DL" to distinguish the direction. For example, "UL-DMRS" may be differentiated from "DL-DMRS."

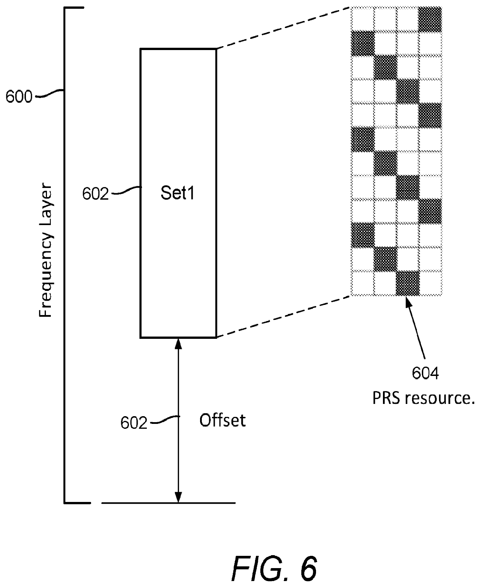

FIG. 6 illustrates conventional radio resource control (RRC) configuration for DL-PRS. A frequency layer 600 is defined in terms of subcarrier spacing (SCS), a "pointA" (which is a common reference point for all resource grids in the frequency domain, is the center of the subcarrier 0 of a common resource block 0 of the lowest resource grid, and can be outside of the carrier BW), a cyclic prefix (CP), and a start physical resource block (PRB). An example information element (IE) that defines a frequency layer 600 is shown below:

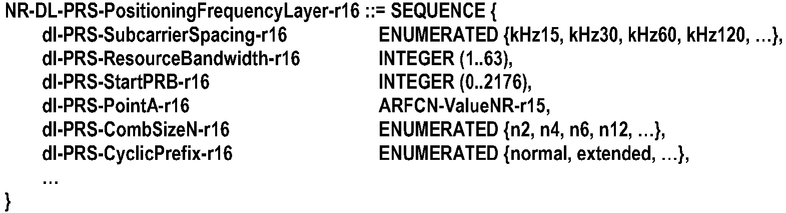

A PRS resource set 602 roughly allocates the time and frequency of the PRS block, and is defined in terms of slots rather than symbols, including period, repetition factor, resource gap, muting, offset, and other parameters. An example IE that defines a PRS resource set 602 is shown below:

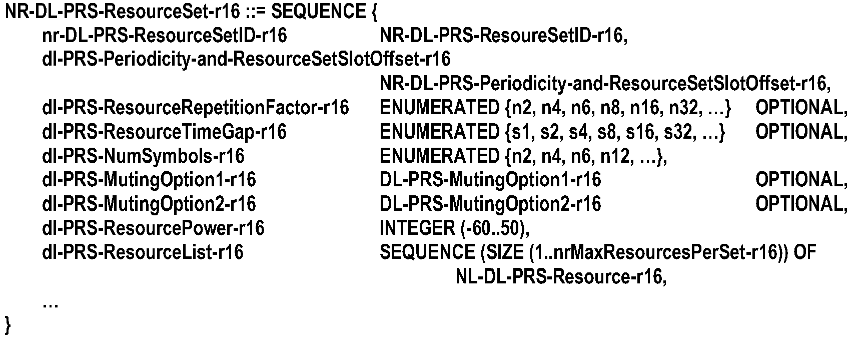

A PRS resource 604 is defined in terms of slots and symbols, using parameters such as symbol offset, resource element offset, quasi-collocation (QCL), etc. An example IE that defines a PRS resource 604 is shown below:

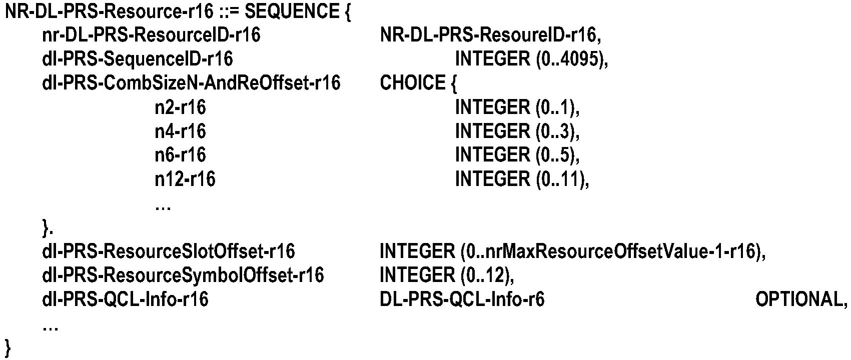

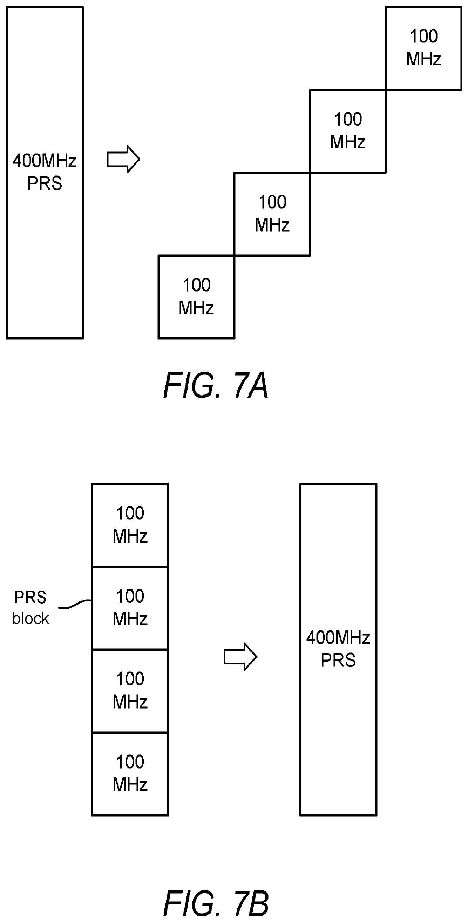

FIGS. 7A and 7B illustrate two forms of PRS band stitching. PRS band stitching is the concept of using PRS signals from different frequency bands to improve the quality of the positioning measurements that are based on PRS. FIG. 7A illustrates time domain combing, which can improve the SINR of the PRS signal. FIG. 7B illustrates frequency domain stitching, which can improve the time resolution of the PRS measurements. In FIG. 7A, the default uses 400MHz over 2 OFDM symbols, but time domain combing instead uses 100MHz * 4 over 2 OFDM symbols, which provides ~6dB of gain. In FIG. 7B, using 100MHz over 2 OFDM symbols * 4 is equivalent to 400MHz over 2 symbols, which provides a 4x finer time resolution of time of arrival (ToA) estimations.

However, current radio resource control (RRC) configuration standards do not fully support band stitching configurations. Accordingly, to address this technical deficiency, the present disclosure provides RRC configuration for PRS stitching.

In one solution, a new IE is used to define PRS stitching configurations in which different PRS resources are stitched together to improve SINR, time resolution, or both. This approach is also referred to herein as using a "PRS stitch list," and the PRS resources that are stitched together using such as PRS stitch list may be collectively referred to herein as a "synthetic PRS" or "synthetic PRS block."

In another solution, a PRS block-based stitching approach is used, in which PRS resources can be configured as patterns of PRS blocks that repeat across frequency and/or time. This solution achieves the same results of improved SINR, timing resolution, or both, by repeating the same PRS resource at different frequencies, times, or both. This approach is also referred to herein as defining an "aggregate PRS" or "aggregate PRS block," because it defines a PRS configuration where a PRS resource can occupy multiple symbols across different bandwidths or bandwidth parts. The PRS resources are considered as a collection (e.g., they are impliedly stitched together) because they are all part of the same aggregate PRS resource definition. An aggregate PRS block can also be a list of different PRS blocks rather than a repetition of a single PRS block. Aggregations can have multiple levels, e.g., aggregate PRS blocks can be aggregated together, e.g., lists of aggregates, aggregates of lists, aggregates of aggregates, and lists of lists are also contemplated by the present disclosure.

Each of these two solutions will now be described in turn. It is noted that the terms "synthetic" and "aggregate" are terms of convenience (i.e., used to distinguish the two approaches described herein) only and are not limiting. Both approaches create an entity that extends the conventional concept of a PRS block beyond its current definitions, and the entity so created could be described as being synthetic, being an aggregate, and so on.

### PRS Stitch List / Synthetic PRS

In the PRS stitch list approach, a new construct, referred to herein as an association field (AF), is used to indicate which PRS resources are to be stitched together. In some aspects, the PRS stitch list is configured by a positioning server, such as a location management function (LMF). In some aspects, the AF can be a new IE.

**Identification of PRS resources.** Ultimately, PRS resources are stitched together, but there are a number of ways that those resources can be unambiguously identified. For example, each PRS resource is part of a PRS resource set, and each PRS resource set is part of a frequency layer (FL). Thus, an individual PRS resource may be identified by specifying the FL identifier (FL_ID), PRS resource set ID (RSET_ID), and PRS resource ID (PR_ID). Thus, a PRS resource may be identified by the tuple containing FL_ID, RSET_ID, and PR_ID. For the purposes of illustration, the notation "FL_ID::RSET_ID::PR_ID" will be used to indicate this hierarchical relationship.

In some aspects, some naming conventions may be imposed that allow unambiguous identification of PRS resources without requiring a full description using FL_ID, RSET_ID, and PR_ID. For example, if PRS resource sets are uniquely named across all FLs (i.e., a PRS resource set in one FL does not have the same ID as a PRS resource set in any other FL), then PRS resources may be identified using only RSET_ID and PR_ID; FL_ID is not required. Thus, in some aspects, PRS resource sets are uniquely named across all FLs. Likewise, if PRS resources are uniquely named across all PRS resource sets (i.e., a PRS resource in one PRS resource set does not have the same ID as a PRS resource in any other PRS resource set in any other FL), then PRS resources may be identified using only PR_ID; FL_ID and RSET_ID are not required. Thus, in some aspects, PRS resources are uniquely named across all PRS resource sets in all FLs.

It is noted that, since PRS stitching applies to PRS resources transmitted by a single TRP (or from the same cell), other options for PRS resource set include PRS, port, and cell ID. For example, PRS resources may be identified via combinations of the following: FL, PRS resource set, TRP, port, and cell ID. Thus, in some aspects, other tuples may be used, including but not limited to, {FL + PRS Resource}, {FL + TRP}, {FL + Cell ID}, {Cell ID + PRS resource}, etc.

**Association of PRS resources.** The AF can specify an association with one level. For example, an AF can associate two or more frequency layers (FLs) to each other, two or more resource sets to each other, two or more resources to each other, or combinations thereof. The following examples are illustrative and not limiting.
- {FL1, FL2}. This example associates frequency layer 1 and frequency layer 2. As explained in more detail below, this association may presume that all PRS resources in all PRS resource sets within both frequency layers may be associated together in a large group, or it may presume that PRS resources and/or PRS resource sets in FL1 are associated only with PRS resources and/or PRS resource sets in FL2 having the same ID, depending upon implementation.
- {FL1::RSET1, FL2::RSET2}. This example associates PRS resource set 1 in frequency layer 1 with PRS resource set 2 in frequency layer 2. Here, too, the association may presume that all PRS resources in FL1::RSET1 and in FL2::RSET2 are associated together in a large group, or it may presume that PRS resources in FL1::RSET1 are only associated with PRS resources in FL2::RSET2 having the same PRS resource ID, depending upon implementation.
- {FL1::RSET1, FL2::RSET1}. This example associates PRS resource set 1 in frequency layer 1 with PRS resource set 1 in frequency layer 2. This example illustrates the point that the PRS resource sets may have the same name but be in different frequency layers.
- {FL1::RSET1::PR1, FL2::RSET2::PR2}. This example associates PRS resource 1 in PRS resource set 1 in frequency layer 1 with PRS resource 2 in PRS resource set 2 in frequency layer 2.
- {FL1::RSET1::PR1, FL2::RSET1::PR1}. This example associates PRS resource 1 in PRS resource set 1 in frequency layer 1 with the same-named PRS resource in the same-named PRS resource set, but in frequency layer 2.
- {FL1::RSET1::PR1, FL2::RSET3}. This example associates a single PRS resource in frequency layer 1 to a PRS resource set in frequency layer 2. This illustrates the point that an association need not be symmetric. For example, this association creates an association group that includes a members all of the PRS resources in FL2::RSET3 and the single PRS resource FL1::RSET1::PR1.
- {FL1::RSET1, FL1::RSET2}. This example associates PRS resource set 1 in frequency layer 1 with PRS resource set 2 in the same frequency layer. The association may presume that all PRS resources in FL1::RSET1 and in FL1::RSET2 are associated together in a large group, or it may presume that PRS resources in FL1::RSET1 are only associated with PRS resources in FL1::RSET2 having the same PRS resource ID, depending upon implementation. This example illustrates the point that the association may be within a single frequency layer.
It is noted that an association can contain a list of associations such as those shown above. In one specific example, an AF could contain a list of tuples such as shown below:

```
     {
          {FL1::RSET1::PR1, FL2::RSET2::PR2},
          {FL1::RSET1::PR5, FL2::RSET2::PR10},
          {FL1::RSET2::PR9, FL2::RSET1::PR1},
          {FL3, FL4},
          {FL1::RSET3, FL3::RSET2},
          ...
     }
 
```

... and so on. Specific examples of PRS stitching will now be described in more detail.

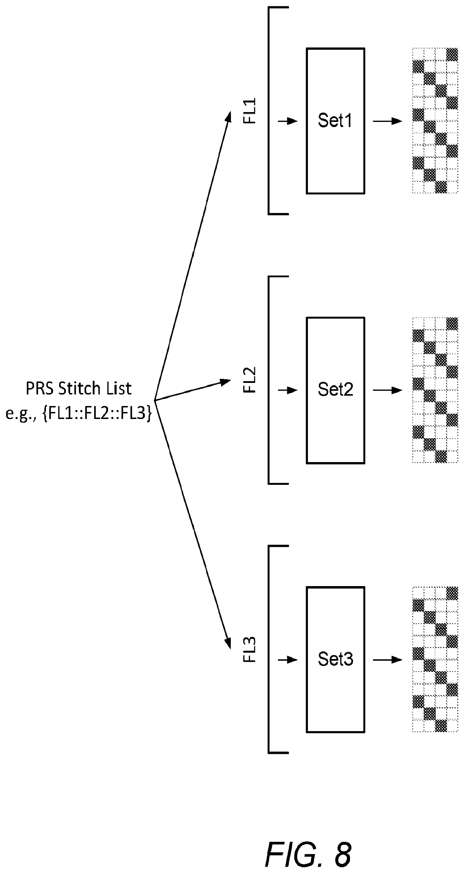

FIG. 8 illustrates PRS stitching according to some aspects of the present disclosure, in which multiple FLs are stitched together. In FIG. 8, a PRS stitch list indicates that FL1, FL2, and FL3 are all stitched together. Thus, the AF could indicate this relationship as {FL1, FL2, FL3}. Each FL has a corresponding PRS resource set - FL1 includes PRS set1, FL2 includes PRS set2, and FL3 includes PRS set3 - and each PRS set includes specific PRS resources, shown as filled boxes in the time versus frequency matrix. This is an example of frequency domain stitching, since the PRS resources being stitched together span multiple frequency layers.

In some aspects, it may be assumed that all PRS resources in all PRS resource sets in FL1 are associated with all PRS resources in all PRS resource sets in FL2. In the example illustrated in FIG. 8, all of the PRS resources in all of the PRS resource sets in all FLs are associated with each other.

In other aspects, where the naming convention allows reuse of RSET_ID by multiple FLs and/or allows reuse of PR_ID across multiple PRS resource sets, this may also simplify identification of PRS resources. For example, where FL1 and FL2 contain PRS resource sets with the same RSET_ID, in some aspects, the PRS resource sets having the same RSET_ID in both FLs may be presumed to be associated with each other (allowing the association to specify only the FLs), while PRS resource sets not having the same RSET_ID in both FLs are not associated with each other. In some aspects, where PRS resource sets having the same RSET_ID contain PRS resources having the same PR_ID, the PRS resources having the same PR_ID in both PRS resource sets may be presumed to be associated with each other (allowing the association to specify only the RSET_IDs), while PRS resources not having the same PR_ID in both PRS resource sets are not associated with each other.

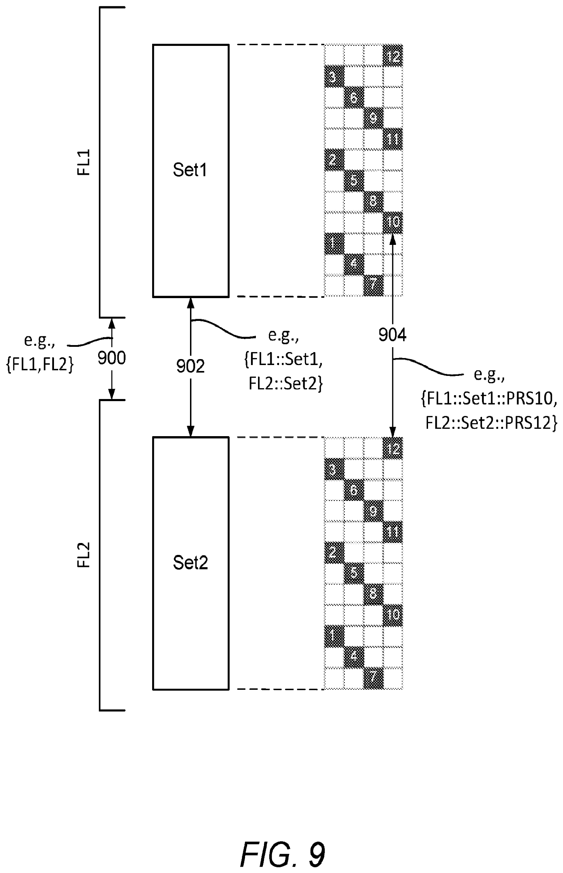

FIG. 9 illustrates PRS stitching according to some aspects of the present disclosure, in which PRS resources are stitched together at the FL level 900, at the PRS resource set level 902, and at the PRS resource level 904. For example, association 900 may be specified as {FL1, FL2}; association 902 may be specified as {FL1::Set1, FL2::set2}; and association 904 may be specified as {FL1::Set1::PRS10, FL2::Set2::PRS12}. In the scenario where the PRS resource set in FL2 had the same RSET_ID as the PRS resource set in FL1, association 904 could also be specified as {FL1::PRS10, FL2::PRS12}, since the presumption is that the RSET_ID is the same for both FLs.

An AF can also specify associations across multiple levels. For example, for each pair of entities associated to each other, each member of the pair may be specified at different levels of granularity. For example, in some aspects, one FL may be associated to another FL (e.g., to all PRS resources within all PRS resource sets within the other FL), to specific PRS resource sets of the other FL, or to specific PRS resources within specific resource sets of the other FL. Likewise, in some aspects, a PRS resource set in one FL may be associated to all PRS resource sets in another FL, to specific PRS resource sets in the other FL (e.g., explicitly, by specifying one or more RSET_IDs in the AF, or implicitly, by associating only PRS resource sets having the same RSET_ID), or to specific PRS resources within specific resource sets of the other FL. Likewise, in some aspects, a specific PRS resource in a specific PRS resource set in a specific FL may be associated to another FL, to specific PRS resource sets within the other FL, or to specific PRS resources within specific PRS resource sets within the other FL. In some aspects, PRS resources may be stitched together using a combination of two or more of the above techniques.

**AF Implementations.** The AF can be implemented in a number of ways. For example, the AF can be part of a definition of a frequency layer (FL), e.g., to associate multiple FLs to each other, a part of a PRS resource set definition, e.g., to associate multiple PRS resource sets to each other, a part of a PRS resource definition, e.g., to associate multiple PRS resources to each other, or combinations thereof. In another aspect, a data construct separate from the definitions of FL, PRS resource set, and PRS resource is used to define stitching.

The concepts described above for DL-PRS

### Block-Based / Aggregate PRS

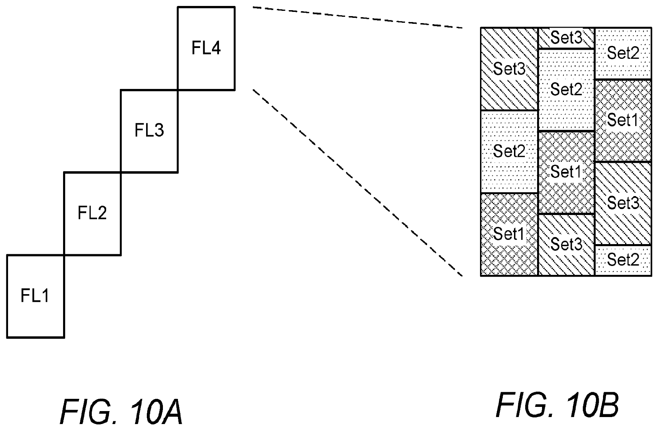

FIGS. 10A and 10B illustrate some limitations of conventional networks. FIG. 10A illustrates the point that the maximum number of FLs currently supported is four. This constraint limits how the advantages of band-stitching. One approach that might overcome that limitation is shown in FIG. 10B, namely the ability to define PRS resource sets in such a way that they dynamically change over time.

In the PRS block-based approach, PRS resources can be configured into patterns of PRS blocks, which can be combined to create an aggregate PRSs. The concept of "PRS block" can be considered as where multiple PRS resource sets spans a fixed bandwidth. PRS aggregation can happen when the PRS blocks are transmitted with the same transmission reception point (TRP) or port, in which case defining multiple PRS blocks across multiple FLs may not be efficient, and defining the parameters of PRS blocks at the FL, PRS resource set, or PRS resource level provides some benefits, especially for intra-band stitching.

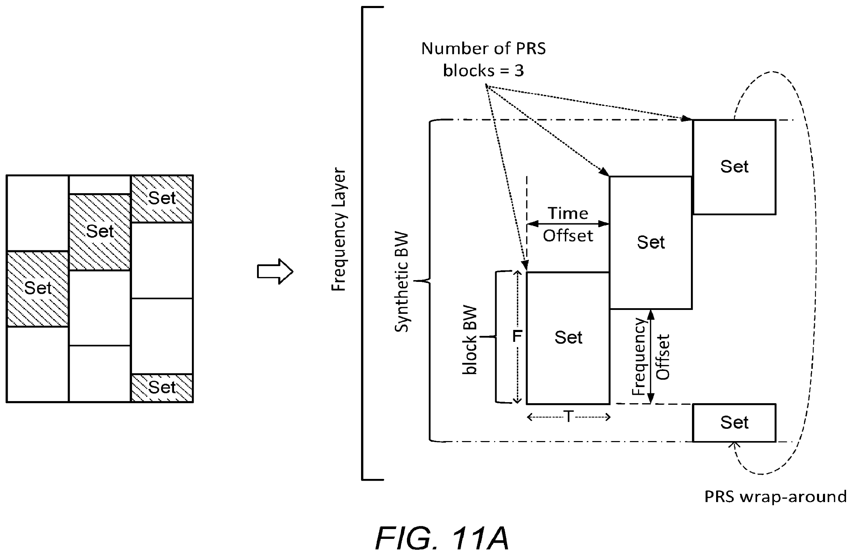

FIGS. 11A-11F illustrate aggregate PRS blocks according to some aspects of the present disclosure. In some aspects, aggregate PRS blocks may be defined using new parameters that characterize the locations, in the time and frequency domains, of multiple PRS resource sets (or multiple instances of the same PRS resource set). The aggregate PRS blocks may be configured using RRC. The example aggregate PRS block definitions described below are illustrative and not limiting.

As shown in FIG. 11A, an aggregate PRS block may comprise multiple instances of a single PRS block, staggered in time, frequency, or both. In some aspects, the aggregate PRS block is defined using parameters such as: number of PRS blocks; the PRS block frequency bandwidth (F); the block time duration (T); the frequency offset between consecutive PRS in resource elements or physical resource blocks (this offset can be zero); a flag to indicate whether PRS wrap-around is allowed or not; a time offset for each PRS block, in terms of slots or symbols (this offset can be zero). In other aspects, the parameters include: a general PRS block comb pattern (e.g., similar to PRS comb), with a predetermined stagger patterns or a customized sequence; and a list of sublists, where each sublist defines the frequency and time pattern of one PRS block (block BW, time offset, start PRB, etc.). In some aspects, the PRS block ID may be specified.

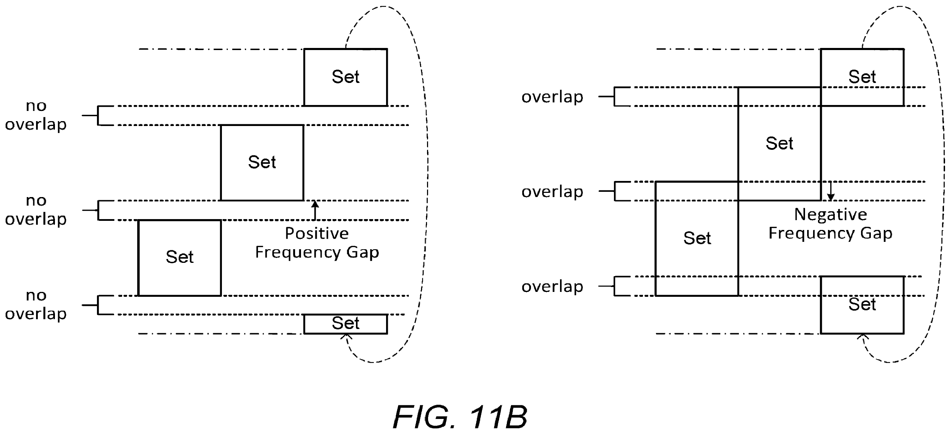

As shown in FIG. 11B, the parameters may include a frequency gap between PRS blocks. In the example on the left side of FIG. 11B, the frequency gap is positive, resulting in consecutive PRS blocks in the time domain that do not overlap in the frequency domain. In the example on the right side of FIG. 11B, the frequency gap is negative, resulting in consecutive PRS blocks in the time domain that overlap in the frequency domain.

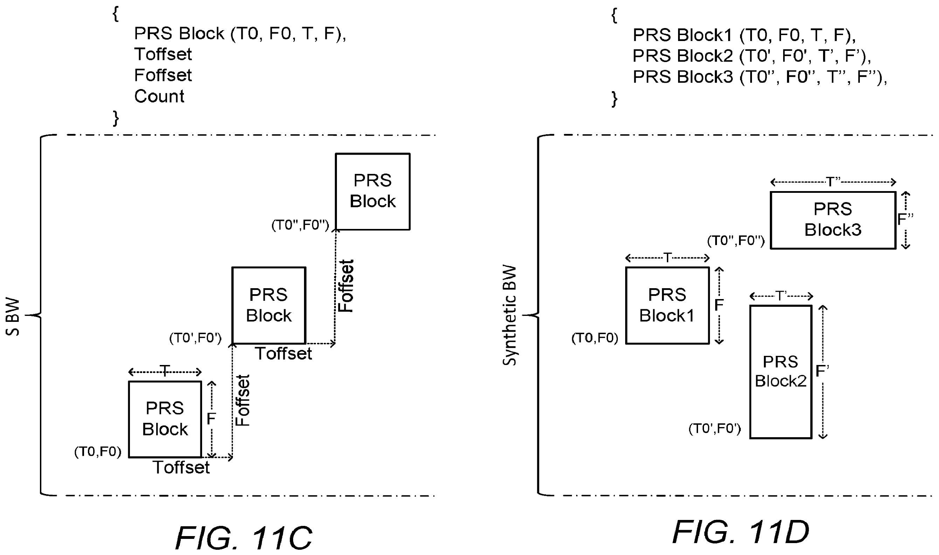

As shown in FIG. 11C, an aggregate PRS block can be defined as a PRS block pattern that defines a PRS block instance having a starting time (T0), a time duration (T), a starting frequency (F0), a frequency bandwidth (F), plus additional parameters that define the timing offset (Toffset) and frequency offset (Foffset) between one instantiation of the PRS block and the subsequent instantiation of the PRS block. In the example shown in FIG. 11C, the starting time of the next PRS block instance (T0') can be calculated as T0+Toffset and the starting frequency of the next PRS block instance (F0') can be calculated as F0+Foffset. If wrapping within the synthetic bandwidth (SBW) is allowed, the calculation would be ((F0+Foffset) mod SBW) + the lowest frequency of SBW. Likewise, the starting time T0'' = T0' + Toffset and the starting frequency F0'' = F0' + Toffset (adjusted to wrapping within SBW, if allowed). An example aggregate PRS block definition is shown below:

```
          {
            PRS Block (T0, F0, T, F);
            Toffset;
            Foffset;
            Count;
            Wraparound
          }
```

As shown in FIG. 11D, an aggregate PRS block can be defined as a set of PRS blocks at different locations in the time and frequency domains. In the example shown in FIG. 11D, each of the different PRS blocks has a different time duration and frequency bandwidth (i.e., in FIG. 11D, T ≠ T' ≠ T" and F ≠ F' ≠ F") but in other aspects, the different PRS block may have the same values for T and F (i.e., T = T' = T'' and F = F' = F"). In the example illustrated in FIG. 11D, the aggregate PRS block definition could have an aggregate PRS block definition such as the one shown below:

```
          {
            PRS Block1 (T0, F0, T, F);
            PRS Block2 (T0', F0', T', F');
            PRS Block3 (T0", F0'', T", F")
          }
```

The wraparound option, if supported, may be specified generally, e.g., using one flag that applies to all PRS blocks in the aggregate, or each PRS block definition may have its own flag.

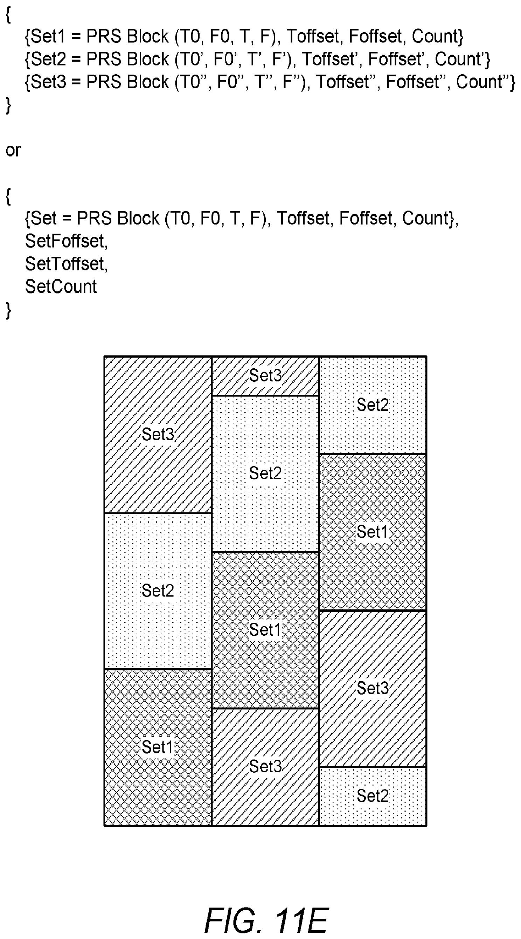

As shown in FIG. 11E, an aggregate PRS block can be defined as a set of PRS block patterns. An example aggregate PRS block definition is shown below:

```
          {
            {Set1 = PRS Block (T0, F0, T, F), Toffset, Foffset, Count};
            {Set2 = PRS Block (T0', F0', T', F'), Toffset', Foffset', Count'};
            {Set3 = PRS Block (T0", F0", T", F"), Toffset", Foffset", Count"}
          }
```

The wraparound option, if supported, may be specified generally, e.g., using one flag that applies to all PRS blocks in the aggregate, or each PRS block definition may have its own flag. The pattern of PRS blocks in FIG. 11E could also be defined as a repetition of a single PRS pattern. An example of this aggregate PRS block definition is shown below:

```
          {
            {Set1 = PRS Block (T0, F0, T, F), Toffset, Foffset, Count};
            SetFoffset;
            SetToffset;
            SetCount
          }
```

In the example shown in FIG. 11E, the SetFoffset is a non-zero value, the SetToffset is zero, the SetCount = 3, and wraparound is enabled. Using this form of aggregate PRS block definition, Set2 is just a second instantiation of Set1 but starting at frequency F0 + SetFoffset, and Set3 is a third instantiation of Set1 but starting at frequency F0 + 2*SetFoffset.

In some aspects, additional parameters can be used to define starting frequency and time values for different layers. In some aspects, these additional parameters may be part of the frequency layer itself. In other aspects, these additional frequency and time parameters may be part of the PRS resource set definition. In some aspects, these additional frequency parameters may be part of the PRS resource definition.

Regarding additional parameters in a FL definition: in some aspects, where there is a uniform PRS pattern across all PRS blocks, starting frequency and time values is sufficient to fully describe the PRS resources. Where there is not a uniform PRS pattern across all PRS blocks, the PRS resource set and PRS resource definitions should include additional information to identify specific PRS resources. The PRS resource set and PRS resource definitions may include these definitions anyway for extra flexibility. For example, if the FL definition only includes additional frequency parameters, then by adjusting the muting pattern and repetition within a PRS resource set, a resource element time offset within the PRS resource definition, or both, the PRS configuration can create the staggered PRS blocks over time.

Regarding additional parameters in a PRS resource set definition: in some aspects, the time and frequency stitching parameters are defined for one TRP. In some aspects, the parameters are applied to all PRS blocks. Alternatively, the PRS blocks to which the additional parameters should be applied must be specified.

Alternatively, each FL can specify PRS resource sets with the same TRP, plus a PRB block pattern or a list of PRS blocks. In some aspects, a PRS block pattern specifies a frequency offset, a time offset, a block bandwidth, a frequency gap, a wrap-around flag, etc. In some aspects, a PRS block specifies a PRS block ID, a PRS bandwidth, and a start PRB or time offset, for both regular and irregular patterns.

Regarding additional parameters in a PRS resource definition: in some aspects, the time domain definition is supported by the current specification and no modification is needed for the FL or PRS resource set definitions; instead, an association field is needed for stitching. For example, for a comb2 PRS: without stitching, only two PRS resources may need to be defined, but for stitching, up to eight PRS resources need to be defined, four of which are stitched together.

Alternatively, each FL can specific PRS resource sets with the same TRP, plus a set of PRS resources, e.g., by specifying a PRS block bandwidth and start PRB, along with an AF that contains other PRS resources for stitching.

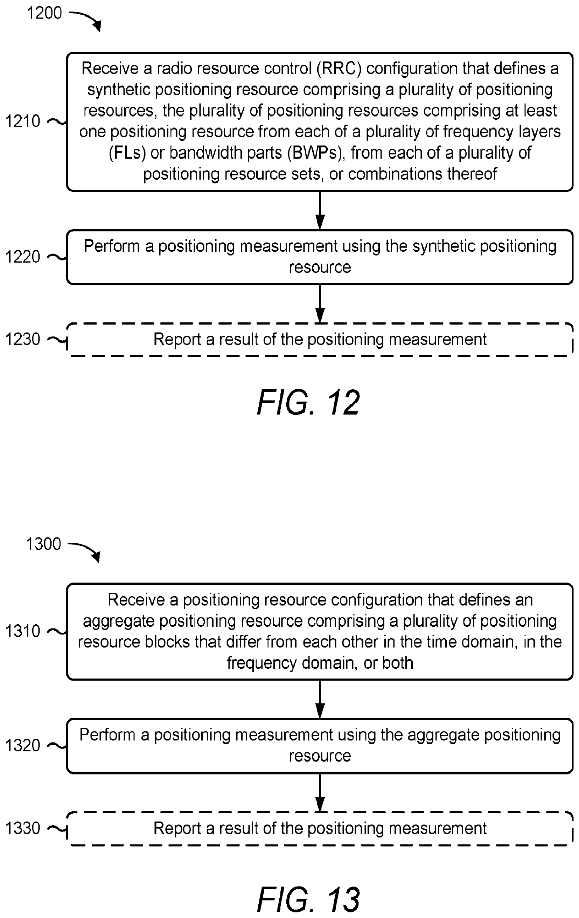

FIG. 12 is a flowchart of an example process 1200 associated with RRC configuration for defining a synthetic positioning resource according to some aspects of the present disclosure. In some implementations, one or more process blocks of FIG. 12 may be performed by a user equipment (UE) (e.g., user equipment (UE) 104). In some implementations, one or more process blocks of FIG. 12 may be performed by another device or a group of devices separate from or including the user equipment (UE). Additionally, or alternatively, one or more process blocks of FIG. 12 may be performed by one or more components of device 302, such as processing system 332, memory 340, WWAN transceiver 310, short-range wireless transceiver 320, SPS receiver 330, or user interface 346.

As shown in FIG. 12, process 1200 may include receiving an RRC configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof (block 1210). For example, the UE may receive a radio resource control (RRC) configuration that defines a synthetic positioning resource comprising a plurality of positioning resources, the plurality of positioning resources comprising at least one positioning resource from each of a plurality of FLs or BWPs, from each of a plurality of positioning resource sets, or combinations thereof, as described above.

As further shown in FIG. 12, process 1200 may include performing a positioning measurement using the synthetic positioning resource (block 1220). For example, the UE may receive one or more reference signals within the synthetic positioning resource according to the RRC configuration and perform a measurement of the one or more reference signals.

As further shown in FIG. 12, in some aspects, process 1200 may include reporting a result of the positioning measurement (optional block 1230). For example, the UE may report a result of the positioning measurement, as described above. For UE-assisted positioning, the result of the positioning measurement may comprise the measured values, and for UE-based positioning, the result of the positioning measurement may comprise a position estimate based on the measured values.

Process 1200 may include additional aspects, such as any single aspect or any combination of aspects described below and/or in connection with one or more other processes described elsewhere herein.

In some aspects, the RRC configuration comprises an information element (IE) that associates the plurality of positioning resources together to form the synthetic positioning resource. In some aspects, the RRC configuration comprises a plurality of parameters that associate the plurality of positioning resources together to form the synthetic positioning resource, the plurality of parameters occupying one or more information elements (IE). In some aspects, the one or more IEs comprise an IE that defines an FL or BWP, an IE that defines a positioning resource set, an IE that defines a positioning resource, or combinations thereof.

In some aspects, each positioning resource is identified by an identifier of a FL or BWP that it occupies, by an identifier of a positioning resource set of which it is a member, by an identifier of the positioning resource, by an identifier of a transmission reception point (TRP) or cell which transmits the positioning resource, or combinations thereof. In some aspects, the synthetic positioning resource is associated with its own positioning resource identifier. In some aspects, each positioning resource comprises a downlink (DL) positioning reference signal (PRS) or an uplink (UL) sounding reference signal (SRS).

In some aspects, the RRC is received from a positioning server. In some aspects, the positioning server comprises a location management function (LMF) or a secure user plane location (SUPL) location platform (SLP). In some aspects, the RRC is received from a serving base station.

In some aspects, among the positioning resource sets within the set of FLs or BWPs, each positioning resource set has a unique positioning resource set ID, each positioning resource has a unique positioning resource ID, or combinations thereof.

In some aspects, the RRC configuration associates a set of FLs or BWPs to each other. In some aspects, all positioning resource sets within the set of FLs or BWPs are associated to each other, all positioning resources within the FLs or BWPs are associated to each other, or combinations thereof. In some aspects, among the positioning resource sets within the set of FLs or BWPs, only positioning resource sets having the same positioning resource set ID are associated to each other, only positioning resources having the same positioning resource ID are associated to each other, or combinations thereof. In some aspects, positioning resource sets for which there is not another positioning resource set having the same positioning resource set ID are associated to each other, positioning resources for which there is not another positioning resource having the same positioning resource ID are associated to each other, or combinations thereof.

In some aspects, the RRC configuration associates a set of positioning resource sets to each other. In some aspects, all positioning resources within the set of positioning resource sets are associated to each other. In some aspects, among the set of positioning resource sets, only positioning resources having the same positioning resource ID are associated to each other. In some aspects, positioning resources for which there is not another positioning resource having the same positioning resource ID are associated to each other.

In some aspects, the RRC configuration associates a set of positioning resources to each other. In some aspects, the RRC configuration associates a FL or BWP with another FL or BWP, associates a FL or BWP with a positioning resource set in another FL or BWP, associates a FL or BWP with a positioning resource in another positioning resource set in the same FL or BWP or in a different FL, or BWP, or combinations thereof.

Although FIG. 12 shows example blocks of process 1200, in some aspects, process 1200 may include additional blocks, fewer blocks, different blocks, or differently arranged blocks than those depicted in FIG. 12. Additionally, or alternatively, two or more of the blocks of process 1200 may be performed in parallel.

FIG. 13 is a flowchart of an example process 1300 associated with positioning resource configuration for defining an aggregate positioning resource according to some aspects of the present disclosure. In some implementations, one or more process blocks of FIG. 13 may be performed by a user equipment (UE) (e.g., user equipment (UE) 104). In some implementations, one or more process blocks of FIG. 12 may be performed by another device or a group of devices separate from or including the user equipment (UE). Additionally, or alternatively, one or more process blocks of FIG. 13 may be performed by one or more components of device 302, such as processing system 332, memory 340, WWAN transceiver 310, short-range wireless transceiver 320, SPS receiver 330, or user interface 346.

As shown in FIG. 13, process 1300 may include receiving a positioning resource configuration that defines an aggregate positioning resource comprising a plurality of positioning resource blocks that differ from each other in the time domain, in the frequency domain, or both (block 1310). For example, the UE may receive a positioning resource configuration that defines an aggregate positioning resource comprising a plurality of positioning resource blocks that differ from each other in the time domain, in the frequency domain, or both, as described above.

As further shown in FIG. 13, process 1300 may include performing a positioning measurement using the aggregate positioning resource (block 1320). For example, the UE may receive one or more reference signals within the aggregate positioning resource according to the positioning resource configuration and perform a measurement of the one or more reference signals.

As further shown in FIG. 13, in some aspects, process 1300 may include reporting a result of the positioning measurement (optional block 1330). For example, the UE may report a result of the positioning measurement, as described above. For UE-assisted positioning, the result of the positioning measurement may comprise the measured values, and for UE-based positioning, the result of the positioning measurement may comprise a position estimate based on the measured values.

Process 1300 may include additional aspects, such as any single aspect or any combination of aspects described below and/or in connection with one or more other processes described elsewhere herein.

In some aspects, the positioning resource configuration comprises an information element (IE) that associates the plurality of positioning resources together to form the aggregate positioning resource.

In some aspects, the positioning resource configuration comprises a list of positioning resource blocks, each positioning resource block having a specified position in a time domain and in a frequency domain.

In some aspects, the positioning resource configuration comprises parameters that define a positioning resource block, a number of times the positioning resource block is repeated, and an offset in the time domain, an offset in the frequency domain, or both, for each repetition of the positioning resource block. In some aspects, the positioning resource configuration further comprises parameters that define a bandwidth of each positioning resource block, a frequency gap between repetitions of the positioning resource block, a time gap between repetitions of the positioning resource block, or a positioning resource block comb pattern. In some aspects, the positioning resource configuration further comprises parameters that define a bandwidth of the aggregate positioning resource. In some aspects, the positioning resource configuration further comprises a wrap-around flag to indicate whether or not a positioning resource block that extends beyond the end of the bandwidth of the aggregate positioning resource will be wrapped around from the beginning of the bandwidth of the aggregate positioning resource. In some aspects, the aggregate positioning resource is associated with its own positioning resource identifier.

In some aspects, each positioning resource block comprises a downlink (DL) positioning reference signal (PRS) block or an uplink (UL) sounding reference signal (SRS) block. In some aspects, the positioning resource configuration is received from a positioning server. In some aspects, the positioning server comprises a location management function (LMF) or a secure user plane location (SUPL) location platform (SLP). In some aspects, the positioning resource configuration is received from a serving base station.

Although FIG. 13 shows example blocks of process 1300, in some aspects, process 1300 may include additional blocks, fewer blocks, different blocks, or differently arranged blocks than those depicted in FIG. 13. Additionally, or alternatively, two or more of the blocks of process 1300 may be performed in parallel.

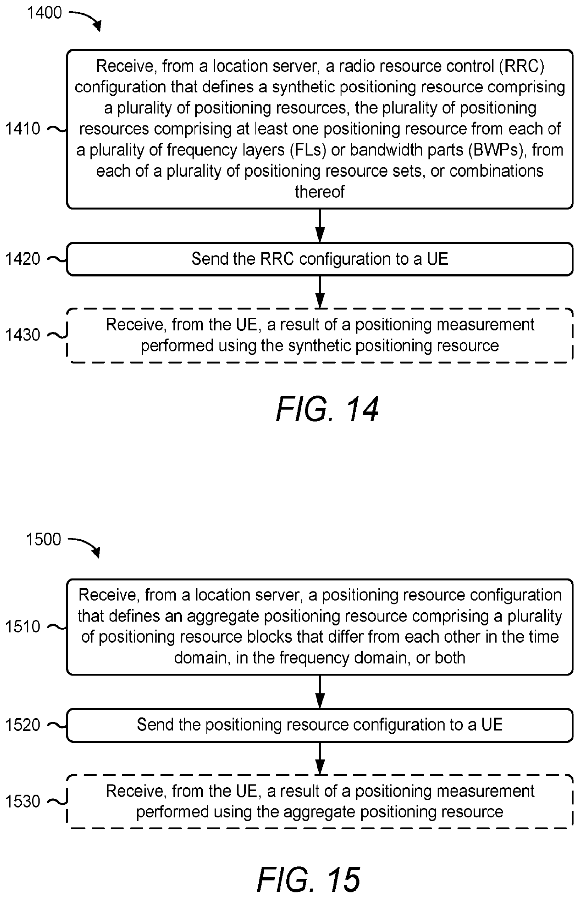

FIG. 14 is a flowchart of an example process 1400 associated with RRC configuration for defining a synthetic positioning resource according to some aspects of the present disclosure. In some implementations, one or more process blocks of FIG. 14 may be performed by a base station (e.g., base station 102). In some implementations, one or more process blocks of FIG. 14 may be performed by another device or a group of devices separate from or including the base station. Additionally, or alternatively, one or more process blocks of FIG. 14 may be performed by one or more components of device 304, such as processing system 384, memory 386, WWAN transceiver 350, short-range wireless transceiver 360, SPS receiver 370, or network interface(s) 380.

As shown in FIG. 14, process 1400 may include receiving, from a location server, a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof (block 1410). For example, the location server may send a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof, as described above.

As further shown in FIG. 14, process 1400 may include sending the RRC configuration to a UE (block 1420). In some aspects, the RRC configuration may comprise an UL-SRS configuration. In some aspects, the RRC configuration may comprise a DL-PRS configuration, in which case, process 1400 may further include receiving, from the UE, a result of a positioning measurement performed using the synthetic resource (optional block 1430). For example, the base station may receive, from the UE, a result of a positioning measurement performed using the synthetic resource, as described above. For UE-assisted positioning, the result of the positioning measurement may comprise the measured values, and for UE-based positioning, the result of the positioning measurement may comprise a position estimate based on the measured values.

Process 1400 may include additional aspects, such as any single aspect or any combination of aspects described below and/or in connection with one or more other processes described elsewhere herein.

Although FIG. 14 shows example blocks of process 1400, in some aspects, process 1400 may include additional blocks, fewer blocks, different blocks, or differently arranged blocks than those depicted in FIG. 14. Additionally, or alternatively, two or more of the blocks of process 1400 may be performed in parallel.

FIG. 15 is a flowchart of an example process 1500 associated with positioning resource configuration for defining an aggregate positioning resource according to some aspects of the present disclosure. In some aspects, one or more process blocks of FIG. 15 may be performed by a base station (e.g., base station 102). In some aspects, one or more process blocks of FIG. 15 may be performed by another device or a group of devices separate from or including the base station. Additionally, or alternatively, one or more process blocks of FIG. 15 may be performed by one or more components of device 304, such as processing system 384, memory 386, WWAN transceiver 350, short-range wireless transceiver 360, SPS receiver 370, or network interface(s) 380.

As shown in FIG. 15, process 1500 may include receiving, from a location server, a positioning resource configuration that defines an aggregate positioning resource comprising a plurality of positioning resource blocks that differ from each other in the time domain, in the frequency domain, or both (block 1510). For example, the location server may send a positioning resource configuration that defines an aggregate positioning resource comprising a plurality of positioning resource blocks that differ from each other in the time domain, in the frequency domain, or both, as described above.

As further shown in FIG. 15, process 1500 may include sending the positioning resource configuration to a UE (block 1520). In some aspects, the positioning resource configuration may comprise an UL-SRS configuration. In some aspects, the positioning resource configuration may comprise a DL-PRS configuration, in which case, process 1500 may further include receiving, from the UE, a result of a positioning measurement performed using the aggregate positioning resource (optional block 1530). For example, the base station may receive, from the UE, a result of a positioning measurement performed using the aggregate positioning resource, as described above. For UE-assisted positioning, the result of the positioning measurement may comprise the measured values, and for UE-based positioning, the result of the positioning measurement may comprise a position estimate based on the measured values.

Process 1500 may include additional aspects, such as any single aspect or any combination of aspects described below and/or in connection with one or more other processes described elsewhere herein.

Although FIG. 15 shows example blocks of process 1500, in some aspects, process 1500 may include additional blocks, fewer blocks, different blocks, or differently arranged blocks than those depicted in FIG. 15. Additionally, or alternatively, two or more of the blocks of process 1500 may be performed in parallel.

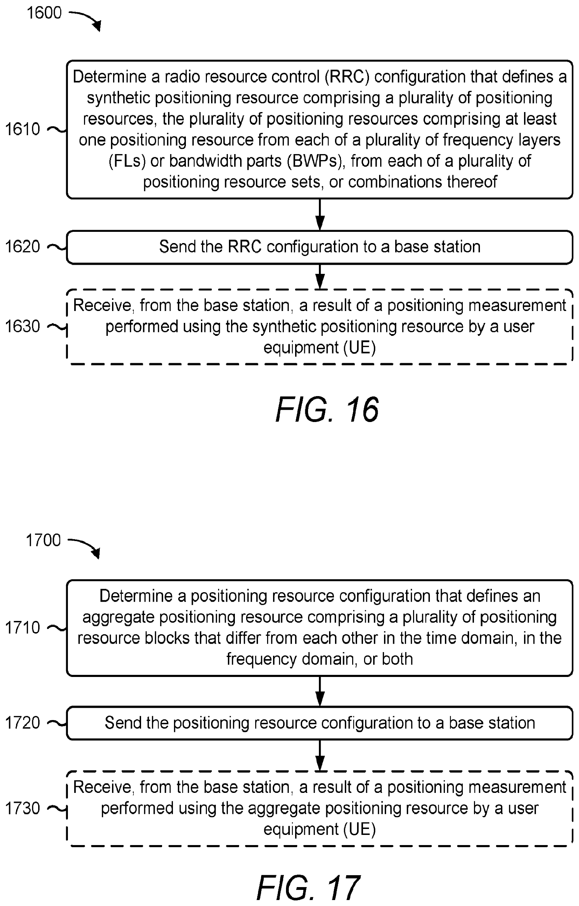

FIG. 16 is a flowchart of an example process 1600 associated with RRC configuration for defining a synthetic positioning resource according to some aspects of the present disclosure. In some implementations, one or more process blocks of FIG. 16 may be performed by a location server (e.g., location server 172). In some implementations, one or more process blocks of FIG. 16 may be performed by another device or a group of devices separate from or including the location server. Additionally, or alternatively, one or more process blocks of FIG. 16 may be performed by one or more components of device 306, such as processing system 394, memory 396, network interface 390, and/or PRS component 398.

As shown in FIG. 16, process 1600 may include determining a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof (block 1610). For example, the location server may determine a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof, as described above.

As further shown in FIG. 16, process 1600 may include sending the RRC configuration to a base station (block 1620). In some aspects, the RRC configuration may comprise an UL-SRS configuration. In some aspects, the RRC configuration may comprise a DL-PRS configuration, in which case, process 1600 may further include receiving, from the base station, a result of a positioning measurement performed using the synthetic resource by a UE (optional block 1630). For example, the location server may receive, from the base station, a result of a positioning measurement performed using the synthetic resource as described above.

Process 1600 may include additional aspects, such as any single aspect or any combination of aspects described below and/or in connection with one or more other processes described elsewhere herein.

Although FIG. 16 shows example blocks of process 1600, in some aspects, process 1600 may include additional blocks, fewer blocks, different blocks, or differently arranged blocks than those depicted in FIG. 16. Additionally, or alternatively, two or more of the blocks of process 1600 may be performed in parallel.

FIG. 17 is a flowchart of an example process 1700 associated with positioning resource configuration for defining an aggregate positioning resource according to some aspects of the present disclosure. In some implementations, one or more process blocks of FIG. 17 may be performed by a location server (e.g., location server 172). In some implementations, one or more process blocks of FIG. 17 may be performed by another device or a group of devices separate from or including the location server. Additionally, or alternatively, one or more process blocks of FIG. 17 may be performed by one or more components of device 306, such as processing system 394, memory 396, network interface 390, and/or PRS component 398.

As shown in FIG. 17, process 1700 may include determining a positioning resource configuration that defines an aggregate positioning resource comprising a plurality of positioning resource blocks that differ from each other in the time domain, in the frequency domain, or both (block 1710). For example, the location server may determine a positioning resource configuration that defines an aggregate positioning resource comprising a plurality of positioning resource blocks that differ from each other in the time domain, in the frequency domain, or both, as described above.

As further shown in FIG. 17, process 1700 may include sending the positioning resource configuration to a base station (block 1720). In some aspects, the positioning resource configuration may comprise an UL-SRS configuration. In some aspects, the positioning resource configuration may comprise a DL-PRS configuration, in which case, process 1700 may further include receiving, from the base station, a result of a positioning measurement performed using the aggregate positioning resource by a UE (optional block 1730). For example, the location server may receive, from the base station, a result of a positioning measurement performed using the aggregate positioning resource as described above.

Process 1700 may include additional aspects, such as any single aspect or any combination of aspects described below and/or in connection with one or more other processes described elsewhere herein.

Although FIG. 17 shows example blocks of process 1700, in some aspects, process 1700 may include additional blocks, fewer blocks, different blocks, or differently arranged blocks than those depicted in FIG. 17. Additionally, or alternatively, two or more of the blocks of process 1700 may be performed in parallel.

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an insulator and a conductor). Furthermore, it is also intended that aspects of a clause can be included in any other independent clause, even if the clause is not directly dependent on the independent clause.

Implementation examples are described in the following numbered clauses:
Clause 1. A method of wireless communication performed by a user equipment (UE), the method comprising: receiving a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and performing a positioning measurement using the synthetic positioning resource.
Clause 2. The method of clause 1, wherein performing a positioning measurement using the synthetic positioning resource comprises receiving one or more reference signals within the synthetic positioning resource according to the RRC configuration and performing a measurement of the one or more reference signals.
Clause 3. The method of any of clauses 1 to 2, further comprising: reporting a result of the positioning measurement.
Clause 4. The method of clause 3, wherein reporting a result of the positioning measurement comprises reporting a measured value, reporting a position estimate based on a measured value, or combinations thereof.
Clause 5. The method of any of clauses 1 to 4, wherein the RRC configuration comprises an information element (IE) that associates the plurality of positioning resources together to form the synthetic positioning resource.
Clause 6. The method of any of clauses 1 to 5, wherein the RRC configuration comprises a plurality of parameters that associate the plurality of positioning resources together to form the synthetic positioning resource, the plurality of parameters occupying one or more information elements (IE).
Clause 7. The method of clause 6, wherein the one or more IEs comprise an IE that defines an FL or BWP, an IE that defines a positioning resource set, an IE that defines a positioning resource, or combinations thereof.
Clause 8. The method of any of clauses 1 to 7, wherein each positioning resource is identified by an identifier of a FL or BWP that it occupies, by an identifier of a positioning resource set of which it is a member, by an identifier of the positioning resource, by an identifier of a transmission reception point (TRP) or cell which transmits the positioning resource, or combinations thereof.
Clause 9. The method of any of clauses 1 to 8, wherein the synthetic positioning resource is associated with its own positioning resource identifier.
Clause 10. The method of any of clauses 1 to 9, wherein each positioning resource comprises a downlink (DL) positioning reference signal (PRS) or an uplink (UL) sounding reference signal (SRS).
Clause 11. The method of any of clauses 1 to 10, wherein the RRC is received from a positioning server.
Clause 12. The method of clause 11, wherein the positioning server comprises a location management function (LMF) or a secure user plane location (SUPL) location platform (SLP).
Clause 13. The method of any of clauses 1 to 12, wherein the RRC is received from a serving base station.
Clause 14. The method of any of clauses 1 to 13, wherein, among the positioning resource sets within the plurality of FLs or BWPs, each positioning resource set has a unique positioning resource set ID, each positioning resource has a unique positioning resource ID, or combinations thereof.
Clause 15. The method of any of clauses 1 to 14, wherein the RRC configuration associates a set of FLs or BWPs to each other.
Clause 16. The method of clause 15, wherein all positioning resource sets within the set of FLs or BWPs are associated to each other, all positioning resources within the FLs or BWPs are associated to each other, or combinations thereof.
Clause 17. The method of any of clauses 15 to 16, wherein, among the positioning resource sets within the set of FLs or BWPs, only positioning resource sets having the same positioning resource set ID are associated to each other, only positioning resources having the same positioning resource ID are associated to each other, or combinations thereof.
Clause 18. The method of clause 17, wherein positioning resource sets for which there is not another positioning resource set having the same positioning resource set ID are associated to each other, positioning resources for which there is not another positioning resource having the same positioning resource ID are associated to each other, or combinations thereof.
Clause 19. The method of any of clauses 1 to 18, wherein the RRC configuration associates a set of positioning resource sets to each other.
Clause 20. The method of clause 19, wherein all positioning resources within the set of positioning resource sets are associated to each other.
Clause 21. The method of any of clauses 19 to 20, wherein, among the set of positioning resource sets, only positioning resources having the same positioning resource ID are associated to each other.
Clause 22. The method of clause 21, wherein positioning resources for which there is not another positioning resource having the same positioning resource ID are associated to each other.
Clause 23. The method of any of clauses 1 to 22, wherein the RRC configuration associates a set of positioning resources to each other.
Clause 24. The method of any of clauses 1 to 23, wherein the RRC configuration: associates a FL or BWP with another FL or BWP; associates a FL or BWP with a positioning resource set in another FL or BWP; associates a FL or BWP with a positioning resource in another positioning resource set in the same FL or BWP or in a different FL, or BWP; or combinations thereof.
Clause 25. A method of wireless communication performed by a user equipment (UE), the method comprising: receiving a positioning resource configuration that defines an aggregate positioning resource comprising a plurality of positioning resource blocks that differ from each other in a time domain, in a frequency domain, or both; and performing a positioning measurement using the aggregate positioning resource.
Clause 26. The method of clause 25, wherein performing a positioning measurement using the aggregate positioning resource comprises receiving one or more reference signals within the aggregate positioning resource according to the positioning resource configuration and performing a measurement of the one or more reference signals.
Clause 27. The method of any of clauses 25 to 26, further comprising: reporting a result of the positioning measurement.
Clause 28. The method of clause 27, wherein reporting a result of the positioning measurement comprises reporting a measured value, reporting a position estimate based on a measured value, or combinations thereof.
Clause 29. The method of any of clauses 25 to 28, wherein the positioning resource configuration comprises an information element (IE) that associates the plurality of positioning resources together to form the aggregate positioning resource.
Clause 30. The method of any of clauses 25 to 29, wherein the positioning resource configuration comprises a list of positioning resource blocks, each positioning resource block having a specified position in a time domain and in a frequency domain.
Clause 31. The method of any of clauses 25 to 30, wherein the positioning resource configuration comprises parameters that define: a positioning resource block; a number of times the positioning resource block is repeated; and an offset in the time domain, an offset in the frequency domain, or both, for each repetition of the positioning resource block.
Clause 32. The method of clause 31, wherein the positioning resource configuration further comprises parameters that define: a bandwidth of each positioning resource block; a frequency gap between repetitions of the positioning resource block; a time gap between repetitions of the positioning resource block; or a positioning resource block comb pattern.
Clause 33. The method of any of clauses 31 to 32, wherein the positioning resource configuration further comprises parameters that define a bandwidth of the aggregate positioning resource.
Clause 34. The method of clause 33, wherein the positioning resource configuration further comprises a wrap-around flag to indicate whether or not a positioning resource block that extends beyond one end of the bandwidth of the aggregate positioning resource will be wrapped around from the other end of the bandwidth of the aggregate positioning resource.
Clause 35. The method of any of clauses 25 to 34, wherein the aggregate positioning resource is associated with its own positioning resource identifier.
Clause 36. The method of any of clauses 25 to 35, wherein each positioning resource block comprises a downlink (DL) positioning reference signal (PRS) block or an uplink (UL) sounding reference signal (SRS) block.
Clause 37. The method of any of clauses 25 to 36, wherein the positioning resource configuration is received from a positioning server.
Clause 38. The method of clause 37, wherein the positioning server comprises a location management function (LMF) or a secure user plane location (SUPL) location platform (SLP).
Clause 39. The method of any of clauses 25 to 38, wherein the positioning resource configuration is received from a serving base station.
Clause 40. The method of any of clauses 25 to 39, wherein the positioning resource configuration associates a set of FLs or BWPs to each other.
Clause 41. The method of clause 40, wherein all positioning resource sets within the set of FLs or BWPs are associated to each other, all positioning resources within the FLs or BWPs are associated to each other, or combinations thereof.
Clause 42. The method of any of clauses 40 to 41, wherein, among the positioning resource sets within the set of FLs or BWPs, only positioning resource sets having the same positioning resource set ID are associated to each other, only positioning resources having the same positioning resource ID are associated to each other, or combinations thereof.
Clause 43. The method of clause 42, wherein positioning resource sets for which there is not another positioning resource set having the same positioning resource set ID are associated to each other, positioning resources for which there is not another positioning resource having the same positioning resource ID are associated to each other, or combinations thereof.
Clause 44. The method of any of clauses 25 to 43, wherein the positioning resource configuration associates a set of positioning resource sets to each other.
Clause 45. The method of clause 44, wherein all positioning resources within the set of positioning resource sets are associated to each other.
Clause 46. The method of any of clauses 44 to 45, wherein, among the set of positioning resource sets, only positioning resources having the same positioning resource ID are associated to each other.
Clause 47. The method of clause 46, wherein positioning resources for which there is not another positioning resource having the same positioning resource ID are associated to each other.
Clause 48. The method of any of clauses 25 to 47, wherein the positioning resource configuration associates a set of positioning resources to each other.
Clause 49. The method of any of clauses 25 to 48, wherein the positioning resource configuration: associates a FL or BWP with another FL or BWP; associates a FL or BWP with a positioning resource set in another FL or BWP; associates a FL or BWP with a positioning resource in another positioning resource set in the same FL or BWP or in a different FL, or BWP; or combinations thereof.
Clause 50. A method of wireless communication performed by a base station, the method comprising: receiving, from a location server, a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and sending the RRC configuration to a UE.
Clause 51. The method of clause 50, wherein the RRC configuration comprises a downlink positioning reference signal (DL-PRS) configuration.
Clause 52. The method of clause 51, further comprising: receiving, from the UE, a result of a positioning measurement performed using the synthetic resource.
Clause 53. The method of clause 52, wherein receiving a result of the positioning measurement comprises receiving a measured value, reporting a position estimate based on a measured value, or combinations thereof.
Clause 54. The method of any of clauses 50 to 53, wherein the RRC configuration comprises an uplink sounding reference signal (UL-SRS) configuration.
Clause 55. The method of any of clauses 50 to 54, wherein the location server comprises a location management function (LMF) or a secure user plane location (SUPL) location platform (SLP).
Clause 56. A method of wireless communication performed by a base station, the method comprising: receiving, from a location server, a positioning resource configuration that defines an aggregate positioning resource comprising a plurality of positioning resource blocks that differ from each other in a time domain, in a frequency domain, or both; and sending the positioning resource configuration to a user equipment (UE).
Clause 57. The method of clause 56, wherein the positioning resource configuration comprises a downlink positioning reference signal (DL-PRS) configuration.
Clause 58. The method of clause 57, further comprising: receiving, from the UE, a result of a positioning measurement performed using the aggregate positioning resource.
Clause 59. The method of clause 58, wherein receiving a result of the positioning measurement comprises receiving a measured value, reporting a position estimate based on a measured value, or combinations thereof.
Clause 60. The method of any of clauses 56 to 59, wherein the positioning resource configuration comprises an uplink sounding reference signal (UL-SRS) configuration.
Clause 61. The method of any of clauses 56 to 60, wherein the location server comprises a location management function (LMF) or a secure user plane location (SUPL) location platform (SLP).
Clause 62. A method of wireless communication performed by a location server, the method comprising: determining a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and sending the RRC configuration to a base station.
Clause 63. The method of clause 62, wherein the RRC configuration comprises a downlink positioning reference signal (DL-PRS) configuration.
Clause 64. The method of clause 63, further comprising: receiving, from the base station, a result of a positioning measurement performed using the synthetic resource by a user equipment (UE).
Clause 65. The method of any of clauses 62 to 64, wherein the RRC configuration comprises an uplink sounding reference signal (UL-SRS) configuration.
Clause 66. The method of any of clauses 62 to 65, wherein the location server comprises a location management function (LMF) or a secure user plane location (SUPL) location platform (SLP).
Clause 67. A method of wireless communication performed by a location server, the method comprising: determining a positioning resource configuration that defines an aggregate positioning resource comprising a plurality of positioning resource blocks that differ from each other in a time domain, in a frequency domain, or both; and sending the positioning resource configuration to a base station.
Clause 68. The method of clause 67, wherein the positioning resource configuration comprises a downlink positioning reference signal (DL-PRS) configuration.
Clause 69. The method of clause 68, further comprising: receiving, from the base station, a result of a positioning measurement performed using the aggregate positioning resource by a user equipment (UE).
Clause 70. The method of any of clauses 67 to 69, wherein the positioning resource configuration comprises an uplink sounding reference signal (UL-SRS) configuration.
Clause 71. The method of any of clauses 67 to 70, wherein the location server comprises a location management function (LMF) or a secure user plane location (SUPL) location platform (SLP).
Clause 72. An apparatus comprising a memory and at least one processor communicatively coupled to the memory, the memory and the at least one processor configured to perform a method according to any of clauses 1 to 71.
Clause 73. An apparatus comprising means for performing a method according to any of clauses 1 to 71.
Clause 74. A non-transitory computer-readable medium storing computer-executable instructions, the computer-executable comprising at least one instruction for causing a computer or processor to perform a method according to any of clauses 1 to 71.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such aspect decisions should not be interpreted as causing a departure from the scope of the present disclosure.

The various illustrative logical blocks, modules, and circuits described in connection with the aspects disclosed herein may be implemented or performed with a general purpose processor, a DSP, an ASIC, an FPGA, or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

Embodiments of the invention can be described with reference to the following numbered clauses, with preferred features laid out in the dependent clauses:
1. A method of wireless communication performed by a user equipment (UE), the method comprising:
   receiving a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and
   performing a positioning measurement using the synthetic positioning resource.
2. The method of clause 1, wherein performing a positioning measurement using the synthetic positioning resource comprises receiving one or more reference signals within the synthetic positioning resource according to the RRC configuration and performing a measurement of the one or more reference signals.
3. The method of clause 1, further comprising:
   reporting a result of the positioning measurement.
4. The method of clause 3, wherein reporting a result of the positioning measurement comprises reporting a measured value, reporting a position estimate based on a measured value, or combinations thereof.
5. The method of clause 1, wherein the RRC configuration comprises an information element (IE) that associates the plurality of positioning resources together to form the synthetic positioning resource.
6. The method of clause 1, wherein the RRC configuration comprises a plurality of parameters that associate the plurality of positioning resources together to form the synthetic positioning resource, the plurality of parameters occupying one or more information elements (IE).
7. The method of clause 6, wherein the one or more IEs comprise an IE that defines an FL or BWP, an IE that defines a positioning resource set, an IE that defines a positioning resource, or combinations thereof.
8. The method of clause 1, wherein each positioning resource is identified by an identifier of a FL or BWP that it occupies, by an identifier of a positioning resource set of which it is a member, by an identifier of the positioning resource, by an identifier of a transmission reception point (TRP) or cell which transmits the positioning resource, or combinations thereof.
9. The method of clause 1, wherein the synthetic positioning resource is associated with its own positioning resource identifier.
10. The method of clause 1, wherein each positioning resource comprises a downlink (DL) positioning reference signal (PRS) or an uplink (UL) sounding reference signal (SRS).
11. The method of clause 1, wherein the RRC is received from a positioning server.
12. The method of clause 11, wherein the positioning server comprises a location management function (LMF) or a secure user plane location (SUPL) location platform (SLP).
13. The method of clause 1, wherein the RRC is received from a serving base station.
14. The method of clause 1, wherein, among the positioning resource sets within the plurality of FLs or BWPs, each positioning resource set has a unique positioning resource set ID, each positioning resource has a unique positioning resource ID, or combinations thereof.
15. The method of clause 1, wherein the RRC configuration associates a set of FLs or BWPs to each other.
16. The method of clause 15, wherein all positioning resource sets within the set of FLs or BWPs are associated to each other, all positioning resources within the FLs or BWPs are associated to each other, or combinations thereof.
17. The method of clause 15, wherein, among the positioning resource sets within the set of FLs or BWPs, only positioning resource sets having the same positioning resource set ID are associated to each other, only positioning resources having the same positioning resource ID are associated to each other, or combinations thereof.
18. The method of clause 17, wherein positioning resource sets for which there is not another positioning resource set having the same positioning resource set ID are associated to each other, positioning resources for which there is not another positioning resource having the same positioning resource ID are associated to each other, or combinations thereof.
19. The method of clause 1, wherein the RRC configuration associates a set of positioning resource sets to each other.
20. The method of clause 19, wherein all positioning resources within the set of positioning resource sets are associated to each other.
21. The method of clause 19, wherein, among the set of positioning resource sets, only positioning resources having the same positioning resource ID are associated to each other.
22. The method of clause 21, wherein positioning resources for which there is not another positioning resource having the same positioning resource ID are associated to each other.
23. The method of clause 1, wherein the RRC configuration associates a set of positioning resources to each other.
24. The method of clause 1, wherein the RRC configuration:
   associates a FL or BWP with another FL or BWP;
   associates a FL or BWP with a positioning resource set in another FL or BWP;
   associates a FL or BWP with a positioning resource in another positioning resource set in the same FL or BWP or in a different FL, or BWP;
   or combinations thereof.
25. A method of wireless communication performed by a user equipment (UE), the method comprising:
   receiving a positioning resource configuration that defines an aggregate positioning resource comprising a plurality of positioning resource blocks that differ from each other in a time domain, in a frequency domain, or both; and
   performing a positioning measurement using the aggregate positioning resource.
26. The method of clause 25, wherein performing a positioning measurement using the aggregate positioning resource comprises receiving one or more reference signals within the aggregate positioning resource according to the positioning resource configuration and performing a measurement of the one or more reference signals.
27. The method of clause 25, further comprising:
   reporting a result of the positioning measurement.
28. The method of clause 27, wherein reporting a result of the positioning measurement comprises reporting a measured value, reporting a position estimate based on a measured value, or combinations thereof.
29. The method of clause 25, wherein the positioning resource configuration comprises an information element (IE) that associates the plurality of positioning resources together to form the aggregate positioning resource.
30. The method of clause 25, wherein the positioning resource configuration comprises a list of positioning resource blocks, each positioning resource block having a specified position in a time domain and in a frequency domain.
31. The method of clause 25, wherein the positioning resource configuration comprises parameters that define:
   a positioning resource block;
   a number of times the positioning resource block is repeated; and
   an offset in the time domain, an offset in the frequency domain, or both, for each repetition of the positioning resource block.
32. The method of clause 31, wherein the positioning resource configuration further comprises parameters that define:
   a bandwidth of each positioning resource block;
   a frequency gap between repetitions of the positioning resource block;
   a time gap between repetitions of the positioning resource block; or
   a positioning resource block comb pattern.
33. The method of clause 31, wherein the positioning resource configuration further comprises parameters that define a bandwidth of the aggregate positioning resource.
34. The method of clause 33, wherein the positioning resource configuration further comprises a wrap-around flag to indicate whether or not a positioning resource block that extends beyond one end of the bandwidth of the aggregate positioning resource will be wrapped around from the other end of the bandwidth of the aggregate positioning resource.
35. The method of clause 25, wherein the aggregate positioning resource is associated with its own positioning resource identifier.
36. The method of clause 25, wherein each positioning resource block comprises a downlink (DL) positioning reference signal (PRS) block or an uplink (UL) sounding reference signal (SRS) block.
37. The method of clause 25, wherein the positioning resource configuration is received from a positioning server.
38. The method of clause 37, wherein the positioning server comprises a location management function (LMF) or a secure user plane location (SUPL) location platform (SLP).
39. The method of clause 25, wherein the positioning resource configuration is received from a serving base station.
40. The method of clause 25, wherein the positioning resource configuration associates a set of FLs or BWPs to each other.
41. The method of clause 40, wherein all positioning resource sets within the set of FLs or BWPs are associated to each other, all positioning resources within the FLs or BWPs are associated to each other, or combinations thereof.
42. The method of clause 40, wherein, among the positioning resource sets within the set of FLs or BWPs, only positioning resource sets having the same positioning resource set ID are associated to each other, only positioning resources having the same positioning resource ID are associated to each other, or combinations thereof.
43. The method of clause 42, wherein positioning resource sets for which there is not another positioning resource set having the same positioning resource set ID are associated to each other, positioning resources for which there is not another positioning resource having the same positioning resource ID are associated to each other, or combinations thereof.
44. The method of clause 25, wherein the positioning resource configuration associates a set of positioning resource sets to each other.
45. The method of clause 44, wherein all positioning resources within the set of positioning resource sets are associated to each other.
46. The method of clause 44, wherein, among the set of positioning resource sets, only positioning resources having the same positioning resource ID are associated to each other.
47. The method of clause 46, wherein positioning resources for which there is not another positioning resource having the same positioning resource ID are associated to each other.
48. The method of clause 25, wherein the positioning resource configuration associates a set of positioning resources to each other.
49. The method of clause 25, wherein the positioning resource configuration:
   associates a FL or BWP with another FL or BWP;
   associates a FL or BWP with a positioning resource set in another FL or BWP;
   associates a FL or BWP with a positioning resource in another positioning resource set in the same FL or BWP or in a different FL, or BWP;
   or combinations thereof.
50. A method of wireless communication performed by a base station, the method comprising:
   receiving, from a location server, a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and
   sending the RRC configuration to a UE.
51. The method of clause 50, wherein the RRC configuration comprises a downlink positioning reference signal (DL-PRS) configuration.
52. The method of clause 51, further comprising:
   receiving, from the UE, a result of a positioning measurement performed using the synthetic resource.
53. The method of clause 52, wherein receiving a result of the positioning measurement comprises receiving a measured value, reporting a position estimate based on a measured value, or combinations thereof.
54. The method of clause 50, wherein the RRC configuration comprises an uplink sounding reference signal (UL-SRS) configuration.
55. The method of clause 50, wherein the location server comprises a location management function (LMF) or a secure user plane location (SUPL) location platform (SLP).
56. A method of wireless communication performed by a base station, the method comprising:
   receiving, from a location server, a positioning resource configuration that defines an aggregate positioning resource comprising a plurality of positioning resource blocks that differ from each other in a time domain, in a frequency domain, or both; and
   sending the positioning resource configuration to a user equipment (UE).
57. The method of clause 56, wherein the positioning resource configuration comprises a downlink positioning reference signal (DL-PRS) configuration.
58. The method of clause 57, further comprising:
   receiving, from the UE, a result of a positioning measurement performed using the aggregate positioning resource.
59. The method of clause 58, wherein receiving a result of the positioning measurement comprises receiving a measured value, reporting a position estimate based on a measured value, or combinations thereof.
60. The method of clause 56, wherein the positioning resource configuration comprises an uplink sounding reference signal (UL-SRS) configuration.
61. The method of clause 56, wherein the location server comprises a location management function (LMF) or a secure user plane location (SUPL) location platform (SLP).
62. A method of wireless communication performed by a location server, the method comprising:
   determining a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and
   sending the RRC configuration to a base station.
63. The method of clause 62, wherein the RRC configuration comprises a downlink positioning reference signal (DL-PRS) configuration.
64. The method of clause 63, further comprising:
   receiving, from the base station, a result of a positioning measurement performed using the synthetic resource by a user equipment (UE).
65. The method of clause 62, wherein the RRC configuration comprises an uplink sounding reference signal (UL-SRS) configuration.
66. The method of clause 62, wherein the location server comprises a location management function (LMF) or a secure user plane location (SUPL) location platform (SLP).
67. A method of wireless communication performed by a location server, the method comprising:
   determining a positioning resource configuration that defines an aggregate positioning resource comprising a plurality of positioning resource blocks that differ from each other in a time domain, in a frequency domain, or both; and
   sending the positioning resource configuration to a base station.
68. The method of clause 67, wherein the positioning resource configuration comprises a downlink positioning reference signal (DL-PRS) configuration.
69. The method of clause 68, further comprising:
   receiving, from the base station, a result of a positioning measurement performed using the aggregate positioning resource by a user equipment (UE).
70. The method of clause 67, wherein the positioning resource configuration comprises an uplink sounding reference signal (UL-SRS) configuration.
71. The method of clause 67, wherein the location server comprises a location management function (LMF) or a secure user plane location (SUPL) location platform (SLP).
72. A user equipment (UE), comprising:
   a memory;
   at least one transceiver; and
   at least one processor communicatively coupled to the memory and the at least one transceiver, the at least one processor configured to:
      receive a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and
      perform a positioning measurement using the synthetic positioning resource.
73. The UE of clause 72, wherein, to perform the positioning measurement using the synthetic resource, the at least one processor is configured to receive one or more reference signals within the synthetic positioning resource according to the RRC configuration and perform a measurement of the one or more reference signals.
74. The UE of clause 72, wherein the at least one processor is further configured to:
   report a result of the positioning measurement.
75. The UE of clause 74, wherein the result of the positioning measurement comprises a measured value, a position estimate based on a measured value, or combinations thereof.
76. The UE of clause 72, wherein the RRC configuration comprises an information element (IE) that associates the plurality of positioning resources together to form the synthetic positioning resource.
77. The UE of clause 72, wherein the RRC configuration comprises a plurality of parameters that associate the plurality of positioning resources together to form the synthetic positioning resource, the plurality of parameters occupying one or more information elements (IE).
78. The UE of clause 77, wherein the one or more IEs comprise an IE that defines an FL or BWP, an IE that defines a positioning resource set, an IE that defines a positioning resource, or combinations thereof.
79. The UE of clause 72, wherein each positioning resource is identified by an identifier of a FL or BWP that it occupies, by an identifier of a positioning resource set of which it is a member, by an identifier of the positioning resource, by an identifier of a transmission reception point (TRP) or cell which transmits the positioning resource, or combinations thereof.
80. The UE of clause 72, wherein the synthetic positioning resource is associated with its own positioning resource identifier.
81. The UE of clause 72, wherein each positioning resource comprises a downlink (DL) positioning reference signal (PRS) or an uplink (UL) sounding reference signal (SRS).
82. The UE of clause 72, wherein the RRC is received from a positioning server.
83. The UE of clause 82, wherein the positioning server comprises a location management function (LMF) or a secure user plane location (SUPL) location platform (SLP).
84. The UE of clause 72, wherein the RRC is received from a serving base station.
85. The UE of clause 72, wherein, among the positioning resource sets within the plurality of FLs or BWPs, each positioning resource set has a unique positioning resource set ID, each positioning resource has a unique positioning resource ID, or combinations thereof.
86. The UE of clause 72, wherein the RRC configuration associates a set of FLs or BWPs to each other.
87. The UE of clause 86, wherein all positioning resource sets within the set of FLs or BWPs are associated to each other, all positioning resources within the FLs or BWPs are associated to each other, or combinations thereof.
88. The UE of clause 86, wherein, among the positioning resource sets within the set of FLs or BWPs, only positioning resource sets having the same positioning resource set ID are associated to each other, only positioning resources having the same positioning resource ID are associated to each other, or combinations thereof.
89. The UE of clause 88, wherein positioning resource sets for which there is not another positioning resource set having the same positioning resource set ID are associated to each other, positioning resources for which there is not another positioning resource having the same positioning resource ID are associated to each other, or combinations thereof.
90. The UE of clause 72, wherein the RRC configuration associates a set of positioning resource sets to each other.
91. The UE of clause 90, wherein all positioning resources within the set of positioning resource sets are associated to each other.
92. The UE of clause 90, wherein, among the set of positioning resource sets, only positioning resources having the same positioning resource ID are associated to each other.
93. The UE of clause 92, wherein positioning resources for which there is not another positioning resource having the same positioning resource ID are associated to each other.
94. The UE of clause 72, wherein the RRC configuration associates a set of positioning resources to each other.
95. The UE of clause 72, wherein the RRC configuration:
   associates a FL or BWP with another FL or BWP;
   associates a FL or BWP with a positioning resource set in another FL or BWP;
   associates a FL or BWP with a positioning resource in another positioning resource set in the same FL or BWP or in a different FL, or BWP;
   or combinations thereof.
96. A user equipment (UE), comprising:
   a memory;
   at least one transceiver; and
   at least one processor communicatively coupled to the memory and the at least one transceiver, the at least one processor configured to:
      receive a positioning resource configuration that defines an aggregate positioning resource comprising a plurality of positioning resource blocks that differ from each other in a time domain, in a frequency domain, or both; and
      perform a positioning measurement using the aggregate positioning resource.
97. The UE of clause 96, wherein, to perform the positioning measurement using the aggregate positioning resource, the at least one processor is configured to receive one or more reference signals within the aggregate positioning resource according to the positioning resource configuration and performing a measurement of the one or more reference signals.
98. The UE of clause 96, wherein the at least one processor is further configured to:
   report a result of the positioning measurement.
99. The UE of clause 98, wherein the result of the positioning measurement comprises a measured value, a position estimate based on a measured value, or combinations thereof.
100. The UE of clause 96, wherein the positioning resource configuration comprises an information element (IE) that associates the plurality of positioning resources together to form the aggregate positioning resource.
101. The UE of clause 96, wherein the positioning resource configuration comprises a list of positioning resource blocks, each positioning resource block having a specified position in a time domain and in a frequency domain.
102. The UE of clause 96, wherein the positioning resource configuration comprises parameters that define:
   a positioning resource block;
   a number of times the positioning resource block is repeated; and
   an offset in the time domain, an offset in the frequency domain, or both, for each repetition of the positioning resource block.
103. The UE of clause 102, wherein the positioning resource configuration further comprises parameters that define:
   a bandwidth of each positioning resource block;
   a frequency gap between repetitions of the positioning resource block;
   a time gap between repetitions of the positioning resource block; or
   a positioning resource block comb pattern.
104. The UE of clause 102, wherein the positioning resource configuration further comprises parameters that define a bandwidth of the aggregate positioning resource.
105. The UE of clause 104, wherein the positioning resource configuration further comprises a wrap-around flag to indicate whether or not a positioning resource block that extends beyond one end of the bandwidth of the aggregate positioning resource will be wrapped around from the other end of the bandwidth of the aggregate positioning resource.
106. The UE of clause 96, wherein the aggregate positioning resource is associated with its own positioning resource identifier.
107. The UE of clause 96, wherein each positioning resource block comprises a downlink (DL) positioning reference signal (PRS) block or an uplink (UL) sounding reference signal (SRS) block.
108. The UE of clause 96, wherein the positioning resource configuration is received from a positioning server.
109. The UE of clause 108, wherein the positioning server comprises a location management function (LMF) or a secure user plane location (SUPL) location platform (SLP).
110. The UE of clause 96, wherein the positioning resource configuration is received from a serving base station.
111. The UE of clause 96, wherein the positioning resource configuration associates a set of FLs or BWPs to each other.
112. The UE of clause 111, wherein all positioning resource sets within the set of FLs or BWPs are associated to each other, all positioning resources within the FLs or BWPs are associated to each other, or combinations thereof.
113. The UE of clause 111, wherein, among the positioning resource sets within the set of FLs or BWPs, only positioning resource sets having the same positioning resource set ID are associated to each other, only positioning resources having the same positioning resource ID are associated to each other, or combinations thereof.
114. The UE of clause 113, wherein positioning resource sets for which there is not another positioning resource set having the same positioning resource set ID are associated to each other, positioning resources for which there is not another positioning resource having the same positioning resource ID are associated to each other, or combinations thereof.
115. The UE of clause 96, wherein the positioning resource configuration associates a set of positioning resource sets to each other.
116. The UE of clause 115, wherein all positioning resources within the set of positioning resource sets are associated to each other.
117. The UE of clause 115, wherein, among the set of positioning resource sets, only positioning resources having the same positioning resource ID are associated to each other.
118. The UE of clause 117, wherein positioning resources for which there is not another positioning resource having the same positioning resource ID are associated to each other.
119. The UE of clause 96, wherein the positioning resource configuration associates a set of positioning resources to each other.
120. The UE of clause 96, wherein the positioning resource configuration:
   associates a FL or BWP with another FL or BWP;
   associates a FL or BWP with a positioning resource set in another FL or BWP;
   associates a FL or BWP with a positioning resource in another positioning resource set in the same FL or BWP or in a different FL, or BWP;
   or combinations thereof.
121. A base station, comprising:
   a memory;
   at least one transceiver; and
   at least one processor communicatively coupled to the memory and the at least one transceiver, the at least one processor configured to:
      receive, from a location server, a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and
      send the RRC configuration to a UE.
122. The base station of clause 121, wherein the RRC configuration comprises a downlink positioning reference signal (DL-PRS) configuration.
123. The base station of clause 122, wherein the at least one processor is further configured to:
   receive, from the UE, a result of a positioning measurement performed using the synthetic resource.
124. The base station of clause 121, wherein the RRC configuration comprises an uplink sounding reference signal (UL-SRS) configuration.
125. The base station of clause 121, wherein the location server comprises a location management function (LMF) or a secure user plane location (SUPL) location platform (SLP).
126. A base station, comprising:
   a memory;
   at least one transceiver; and
   at least one processor communicatively coupled to the memory and the at least one transceiver, the at least one processor configured to:
      receive, from a location server, a positioning resource configuration that defines an aggregate positioning resource comprising a plurality of positioning resource blocks that differ from each other in a time domain, in a frequency domain, or both; and
      send the positioning resource configuration to a user equipment (UE).
127. The base station of clause 126, wherein the positioning resource configuration comprises a downlink positioning reference signal (DL-PRS) configuration.
128. The base station of clause 127, wherein the at least one processor is further configured to:
   receive, from the UE, a result of a positioning measurement performed using the aggregate positioning resource.
129. The base station of clause 126, wherein the positioning resource configuration comprises an uplink sounding reference signal (UL-SRS) configuration.
130. The base station of clause 126, wherein the location server comprises a location management function (LMF) or a secure user plane location (SUPL) location platform (SLP).
131. A location server, comprising:
   a memory;
   at least one transceiver; and
   at least one processor communicatively coupled to the memory and the at least one transceiver, the at least one processor configured to:
      determine a radio resource control (RRC) configuration that defines a synthetic positioning resource comprising a plurality of positioning resources, the plurality of positioning resources comprising at least one positioning resource from each of a plurality of frequency layers (FLs) or bandwidth parts (BWPs), from each of a plurality of positioning resource sets, or combinations thereof; and
      send the RRC configuration to a base station.
132. The location server of clause 131, wherein the RRC configuration comprises a downlink positioning reference signal (DL-PRS) configuration.
133. The location server of clause 132, wherein the at least one processor is further configured to:
   receive, from the base station, a result of a positioning measurement performed using the synthetic resource by a user equipment (UE).
134. The location server of clause 131, wherein the RRC configuration comprises an uplink sounding reference signal (UL-SRS) configuration.
135. The location server of clause 131, wherein the location server comprises a location management function (LMF) or a secure user plane location (SUPL) location platform (SLP).
136. A location server, comprising:
   a memory;
   at least one transceiver; and
   at least one processor communicatively coupled to the memory and the at least one transceiver, the at least one processor configured to:
      determine a positioning resource configuration that defines an aggregate positioning resource comprising a plurality of positioning resource blocks that differ from each other in a time domain, in a frequency domain, or both; and
      send the positioning resource configuration to a base station.
137. The location server of clause 136, wherein the positioning resource configuration comprises a downlink positioning reference signal (DL-PRS) configuration.
138. The location server of clause 137, wherein the at least one processor is further configured to:
   receive, from the base station, a result of a positioning measurement performed using the aggregate positioning resource by a user equipment (UE).
139. The location server of clause 136, wherein the positioning resource configuration comprises an uplink sounding reference signal (UL-SRS) configuration.
140. The location server of clause 136, wherein the location server comprises a location management function (LMF) or a secure user plane location (SUPL) location platform (SLP).

## Claims

1. A method of wireless communication performed by a user equipment (UE), the
method comprising:
receiving a positioning resource configuration that defines an aggregate positioning resource comprising a plurality of positioning resource blocks that differ from each other in a time domain, in a frequency domain, or both; and
performing a positioning measurement using the aggregate positioning resource.

2. The method of claim 1, wherein performing a positioning measurement using the aggregate positioning resource comprises receiving one or more reference signals within the aggregate positioning resource according to the positioning resource configuration and performing a measurement of the one or more reference signals.

3. The method of claim 1, further comprising:
reporting a result of the positioning measurement, optionally wherein reporting a result of the positioning measurement comprises reporting a measured value, reporting a position estimate based on a measured value, or combinations thereof.

4. The method of claim 1, wherein the positioning resource configuration comprises an information element (IE) that associates the plurality of positioning resources together to form the aggregate positioning resource, or wherein the positioning resource configuration comprises a list of positioning resource blocks, each positioning resource block having a specified position in a time domain and in a frequency domain.

5. The method of claim 1, wherein the positioning resource configuration comprises parameters that define:
a positioning resource block;
a number of times the positioning resource block is repeated; and
an offset in the time domain, an offset in the frequency domain, or both, for each repetition of the positioning resource block, optionally:
wherein the positioning resource configuration further comprises parameters that define:
a bandwidth of each positioning resource block;
a frequency gap between repetitions of the positioning resource block;
a time gap between repetitions of the positioning resource block;
a positioning resource block comb pattern; or
a bandwidth of the aggregate positioning resource; or
wherein the positioning resource configuration further comprises a wrap-around flag to indicate whether or not a positioning resource block that extends beyond one end of the bandwidth of the aggregate positioning resource will be wrapped around from the other end of the bandwidth of the aggregate positioning resource.

6. The method of claim 1, wherein the aggregate positioning resource is associated with its own positioning resource identifier; wherein each positioning resource block comprises a downlink (DL) positioning reference signal (PRS) block or an uplink (UL) sounding reference signal (SRS) block; and/or wherein the positioning resource configuration is received from a positioning server or a base station.

7. The method of claim 1, wherein:
the positioning resource configuration associates a set of FLs or BWPs to each other, optionally
wherein all positioning resource sets within the set of FLs or BWPs are associated to each other, all positioning resources within the FLs or BWPs are associated to each other, or combinations thereof; or
wherein, among the positioning resource sets within the set of FLs or BWPs, only positioning resource sets having the same positioning resource set ID are associated to each other, only positioning resources having the same positioning resource ID are associated to each other, or combinations thereof, optionally wherein positioning resource sets for which there is not another positioning resource set having the same positioning resource set ID are associated to each other, positioning resources for which there is not another positioning resource having the same positioning resource ID are associated to each other, or combinations thereof; or
the positioning resource configuration associates a set of positioning resource sets to each other, optionally
wherein all positioning resources within the set of positioning resource sets are associated to each other; or
wherein, among the set of positioning resource sets, only positioning resources having the same positioning resource ID are associated to each other, optionally, wherein positioning resources for which there is not another positioning resource having the same positioning resource ID are associated to each other.

8. The method of claim 1, wherein the positioning resource configuration associates a set of positioning resources to each other; or
wherein the positioning resource configuration:
associates a FL or BWP with another FL or BWP;
associates a FL or BWP with a positioning resource set in another FL or BWP;
associates a FL or BWP with a positioning resource in another positioning resource set in the same FL or BWP or in a different FL, or BWP;

9. A method of wireless communication performed by a base station, the method comprising:
receiving, from a location server, a positioning resource configuration that defines an aggregate positioning resource comprising a plurality of positioning resource blocks that differ from each other in a time domain, in a frequency domain, or both; and
sending the positioning resource configuration to a user equipment (UE).

10. The method of claim 9, wherein:
the positioning resource configuration comprises a downlink positioning reference signal (DL-PRS) configuration, optionally further comprising receiving, from the UE, a result of a positioning measurement performed using the aggregate positioning resource, optionally, wherein receiving a result of the positioning measurement comprises receiving a measured value, reporting a position estimate based on a measured value, or combinations thereof; or
the positioning resource configuration comprises an uplink sounding reference signal (UL-SRS) configuration; and/or
wherein the location server comprises a location management function (LMF) or a secure user plane location (SUPL) location platform (SLP)..

11. A method of wireless communication performed by a location server, the method comprising:
determining a positioning resource configuration that defines an aggregate positioning resource comprising a plurality of positioning resource blocks that differ from each other in a time domain, in a frequency domain, or both; and
sending the positioning resource configuration to a base station.

12. The method of claim 11, wherein:
the positioning resource configuration comprises a downlink positioning reference signal (DL-PRS) configuration, optionally further comprising receiving, from the base station, a result of a positioning measurement performed using the aggregate positioning resource by a user equipment (UE); or
the positioning resource configuration comprises an uplink sounding reference signal (UL-SRS) configuration; and/or
the location server comprises a location management function (LMF) or a secure user plane location (SUPL) location platform (SLP).

13. A user equipment (UE), comprising:
a memory;
at least one transceiver; and
at least one processor communicatively coupled to the memory and the at least one transceiver, the at least one processor configured to:
receive a positioning resource configuration that defines an aggregate positioning resource comprising a plurality of positioning resource blocks that differ from each other in a time domain, in a frequency domain, or both; and
perform a positioning measurement using the aggregate positioning resource.

14. A base station, comprising:
a memory;
at least one transceiver; and
at least one processor communicatively coupled to the memory and the at least one transceiver, the at least one processor configured to:
receive, from a location server, a positioning resource configuration that defines an aggregate positioning resource comprising a plurality of positioning resource blocks that differ from each other in a time domain, in a frequency domain, or both; and
send the positioning resource configuration to a user equipment (UE).

15. A location server, comprising:
a memory;
at least one transceiver; and
at least one processor communicatively coupled to the memory and the at least one transceiver, the at least one processor configured to:
determine a positioning resource configuration that defines an aggregate positioning resource comprising a plurality of positioning resource blocks that differ from each other in a time domain, in a frequency domain, or both; and
send the positioning resource configuration to a base station.
